(19) Europäisches Patentamt
European Patent Office
Office européen des brevets

(11) **EP 4 644 941 A1**

(12) **EUROPEAN PATENT APPLICATION**
published in accordance with Art. 153(4) EPC

(43) Date of publication:
**05.11.2025 Bulletin 2025/45**

(21) Application number: **23911683.3**

(22) Date of filing: **12.12.2023**

(51) International Patent Classification (IPC):
**G01S 5/26** *(2006.01)*　　**G01S 5/06** *(2006.01)*
**G01S 5/14** *(2006.01)*　　**G01S 5/30** *(2006.01)*

(52) Cooperative Patent Classification (CPC):
**G01S 5/06; G01S 5/14; G01S 5/26; G01S 5/30**

(86) International application number:
**PCT/JP2023/044359**

(87) International publication number:
**WO 2024/142902 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.12.2022　JP 2022208192**

(71) Applicant: **Sony Group Corporation**
**Tokyo 108-0075 (JP)**

(72) Inventors:
• **SATO Tetsuro**
**Tokyo 108-0075 (JP)**
• **KAMATA Hiroyuki**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **PROGRAM, INFORMATION PROCESSING DEVICE, AND INFORMATION PROCESSING METHOD**

(57)　The present disclosure relates to a program, an information processing device, and an information processing method capable of measuring, with high accuracy, the position of an electronic device in a system, the system including a plurality of devices each including a speaker and the electronic device including a microphone.

A plurality of audio output blocks located at known positions outputs an audio signal including a spreading code signal obtained by performing spread spectrum modulation using a spreading code in a horizontal direction so that an audio reception block can receive the audio signal as a direct wave and outputs the audio signal toward a ceiling so that the audio signal reflects off the ceiling and thereafter can be received as a reflected wave. The audio reception block can receive the audio signal from one audio output block through at least two paths: a direct wave and a reflected wave, which makes it possible to form equations corresponding to the two paths and calculate the position of an audio receiving unit with high accuracy. The present disclosure is applicable to game controllers and HMDs.

FIG. 2

**Description**

TECHNICAL FIELD

The present disclosure relates to a program, an information processing device, and an information processing method, and more particularly, to a program, an information processing device, and an information processing method capable of measuring a position of a reception-side device with high accuracy using direct waves and reflected waves of signals transmitted by a plurality of transmission-side devices.

BACKGROUND ART

There is a technology in which a transmission device modulates a data code with a code sequence to generate a modulated signal and emits the modulated signal as sound, and a reception device receives the emitted sound, correlates the modulated signal that is the received audio signal with the code sequence, and measures a distance to the transmission device on the basis of a correlation peak.
Furthermore, as this positioning technology, a technology for improving positioning accuracy by using both direct and reflected waves of emitted sound for positioning has been proposed (see Non-Patent Document 1).

CITATION LIST

NON-PATENT DOCUMENT

Non-Patent Document 1: MIRAGE: 2D SOURCE LOCALIZATION USING MICROPHONE PAIR AUGMENTATION WITH ECHOES

SUMMARY OF THE INVENTION

PROBLEMS TO BE SOLVED BY THE INVENTION

However, in the technology described in Non-Patent Document 1, since both the direct and reflected waves of the same signal are used for positioning, when the emitted sound is received, there is a possibility that the direct and reflected waves cannot be distinguished, making it impossible to achieve accurate positioning.
The present disclosure has been made in view of such circumstances, and it is particularly an object of the present disclosure to achieve highly accurate measurement of the position of a reception-side device using both direct and reflected waves of signals transmitted by a plurality of transmission-side devices.

SOLUTIONS TO PROBLEMS

An information processing device and a program according to one aspect of the present disclosure are an information processing device and a program including: an audio receiving unit that receives an audio signal including a spreading code signal obtained by performing spread spectrum modulation using a spreading code, the audio signal being output from each of a plurality of audio output blocks located at known positions; and a position calculation unit that calculates a position of the audio receiving unit on the basis of distances to the plurality of audio output blocks identified on the basis of a propagation time that is time taken for the audio signals of the plurality of audio output blocks to be transmitted to and received by the audio receiving unit, in which the audio receiving unit receives the audio signals transmitted by direct waves from the plurality of audio output blocks and the audio signals transmitted by reflected waves output from the plurality of audio output blocks and reflected off a reflective object, and the position calculation unit calculates the position of the audio receiving unit on the basis of the audio signal transmitted by each of the direct and reflected waves.
An information processing method according to one aspect of the present disclosure is an information processing method of an information processing device, the information processing device including: an audio receiving unit that receives an audio signal including a spreading code signal obtained by performing spread spectrum modulation using a spreading code, the audio signal being output from each of a plurality of audio output blocks located at known positions; and a position calculation unit that calculates a position of the audio receiving unit on the basis of distances to the plurality of audio output blocks identified on the basis of a propagation time that is time taken for the audio signals of the plurality of audio output blocks to be transmitted to and received by the audio receiving unit, the information processing method including: causing the audio receiving unit to receive the audio signals transmitted by direct waves from the plurality of audio output blocks and the audio signals transmitted by reflected waves output from the plurality of audio output blocks and reflected off a reflective object, and causing the position calculation unit to calculate the position of the audio receiving unit on the basis of the audio signal transmitted by each of the direct and reflected waves.

According to one aspect of the present disclosure, the audio receiving unit receives an audio signal including a spreading code signal obtained by performing spread spectrum modulation using a spreading code, the audio signal being output from each of a plurality of audio output blocks located at known positions, the position calculation unit calculates the position of the audio receiving unit on the basis of distances to the plurality of audio output blocks identified on the basis of a propagation time that is time taken for the audio signals of the plurality of audio output blocks to be transmitted to and received by the audio receiving unit, the audio signal receiving unit receives the audio signals transmitted by direct waves from the plurality of audio output blocks and the audio signals transmitted by reflected waves output from the plurality of audio output blocks and reflected off a reflective object, and the position calculation unit calculates the position of the audio receiving unit on the basis of the ranging signal transmitted by each of the direct and reflected waves.

BRIEF DESCRIPTION OF DRAWINGS

Fig. 1 is a diagram for describing a configuration example of an acoustic positioning system of the present disclosure.
Fig. 2 is a diagram for describing an appearance configuration example of an audio output block in Fig. 1.
Fig. 3 is a diagram for describing functions implemented by the audio output block in Fig. 1.
Fig. 4 is a diagram for describing functions implemented by the electronic device in Fig. 1.
Fig. 5 is a diagram for describing communication using a spreading code.
Fig. 6 is a diagram for describing autocorrelation and cross-correlation of a spreading code.
Fig. 7 is a diagram for describing a propagation time of a spreading code using cross-correlation.
Fig. 8 is a diagram for describing a configuration example of a propagation time calculation unit.
Fig. 9 is a diagram for describing human hearing.
Fig. 10 is a diagram for describing a frequency shift of a spreading code.
Fig. 11 is a diagram for describing a procedure for frequency shifting of a spreading code.
Fig. 12 is a diagram for describing how to obtain the position of the electronic device.
Fig. 13 is a diagram for describing a coordinate system in a case where a reflected wave is used.
Fig. 14 is a diagram for describing a first constraint condition for selecting direct and reflected waves.
Fig. 15 is a diagram for describing a second constraint condition for selecting direct and reflected waves.
Fig. 16 is a diagram for describing a third constraint condition for selecting direct and reflected waves.
Fig. 17 is a flowchart for describing position measurement processing by the electronic device.
Fig. 18 is a flowchart for describing position measurement processing by the audio output block.
Fig. 19 is a flowchart for describing propagation time calculation processing.
Fig. 20 is a diagram for describing an example of a case where a direct wave is blocked as a first modification.
Fig. 21 is a diagram for describing cross-correlation with a direct wave in a case where the direct wave is blocked.

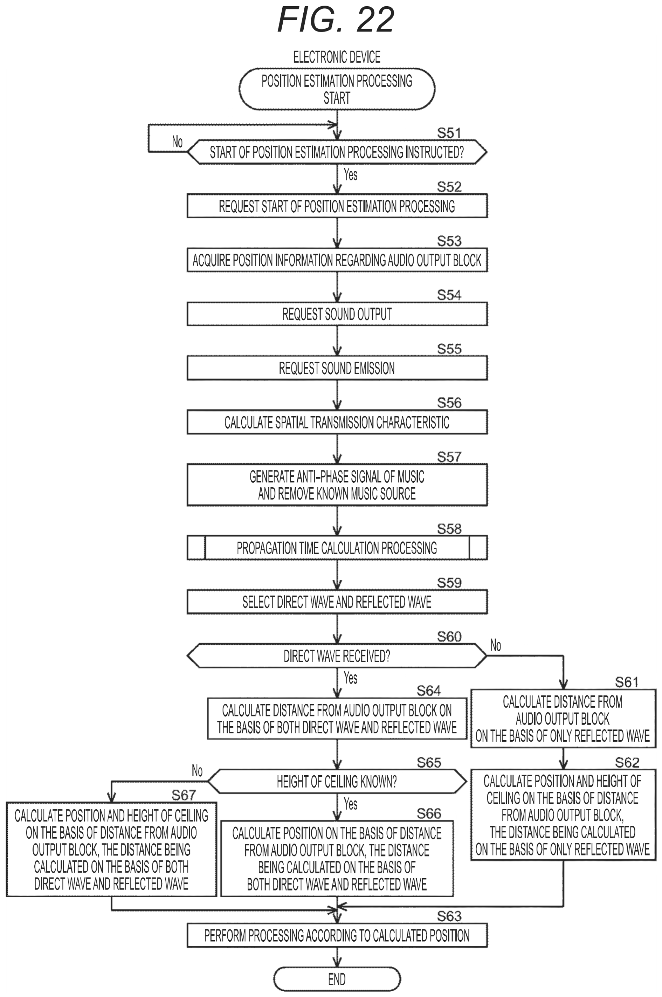

Fig. 22 is a flowchart for describing a first modification of the position measurement processing by the electronic device.
Fig. 23 is a diagram for describing a second modification.
Fig. 24 is a diagram for describing a third modification.
Fig. 25 is a diagram for describing a fourth modification.
Fig. 26 is a diagram for describing a fifth modification.
Fig. 27 is a diagram for describing the fifth modification.
Fig. 28 is a diagram illustrating a configuration example of a general-purpose computer.

MODE FOR CARRYING OUT THE INVENTION

Hereinafter, a preferred embodiment of the present disclosure will be described in detail with reference to the accompanying drawings. Note that, in the present specification and drawings, components having substantially the same functional configuration are denoted by the same reference numerals, and redundant description is omitted.

Hereinafter, modes for carrying out the present technology will be described. The description will be given in the following order.

1. Preferred embodiment
2. First modification
3. Second modification
4. Third modification
5. Fourth modification

6. Fifth modification

7. Example of execution by software

<<1. Preferred embodiment>>

<Configuration example of acoustic positioning system>

In particular, the present disclosure enables a plurality of devices each including a speaker and a device including a microphone to measure the position of the device including the microphone with high accuracy using a direct wave and a reflected wave of emitted sound.

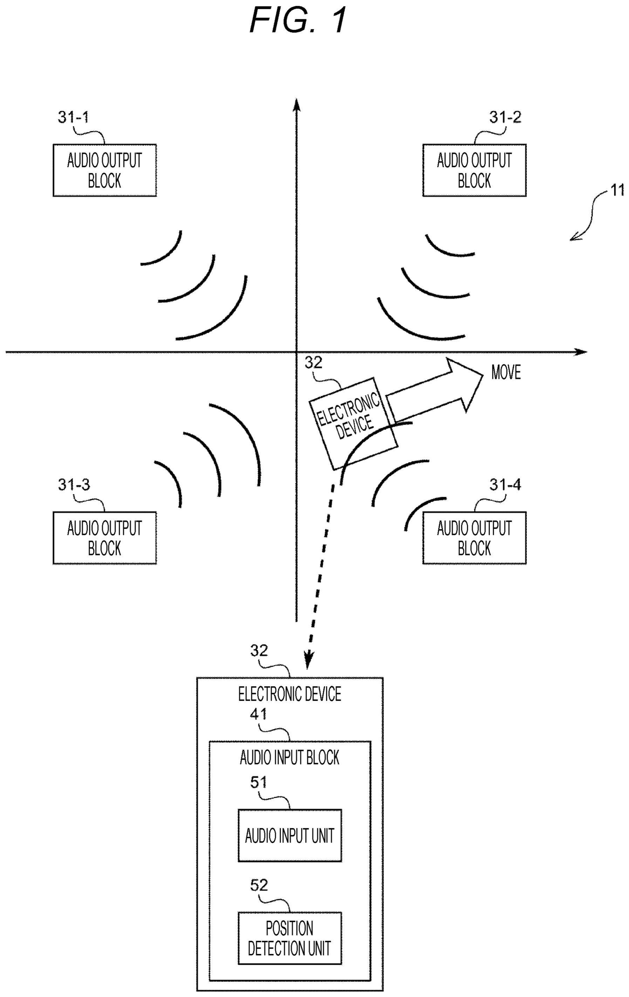

Fig. 1 illustrates a configuration example of an acoustic positioning system to which the technology of the present disclosure is applied.

The acoustic positioning system 11 in Fig. 1 includes audio output blocks 31-1 to 31-4 and an electronic device 32. Note that, hereinafter, in a case where it is not necessary to particularly distinguish the audio output blocks 31-1 to 31-4 from each other, they are simply referred to as the audio output block 31, and other configurations are also referred to in a similar manner.

Each of the audio output blocks 31-1 to 31-4 includes a speaker, and emits sound by including, in sound such as a music content, a game, or known music, an audio signal as a ranging signal including a modulated signal obtained by performing spread spectrum modulation on a data code for identifying the position of the electronic device 32 using a spreading code.

The electronic device 32 is carried or worn by the user, and is, for example, a smartphone or a head mounted display (HMD) used as a game controller.

The electronic device 32 includes an audio input block 41 including an audio input unit 51 such as a microphone that receives sound including the audio signal as the ranging signal emitted from each of the audio output blocks 31-1 to 31-4, and a position detection unit 52.

The audio input block 41 recognizes in advance the position in the space of each of the audio output blocks 31-1 to 31-4 as known position information through communication (the ranging signal or another communication means) between the audio output block 31 and the electronic device 32. The audio input block 41 causes the audio input unit 51 to receive the audio signal as the ranging signal including the modulated signal included in the sound emitted from the audio output block 31, and outputs the audio signal to the position detection unit 52. The position detection unit 52 obtains a distance to each of the audio output blocks 31-1 to 31-4 on the basis of the audio signal as the ranging signal including the modulated signal supplied from the audio input block 41, and detects the self-position relative to the audio output blocks 31-1 to 31-4 on the basis of the obtained distances.

With this configuration, in a case where the electronic device 32 is, for example, an HMD including a see-through display unit or a smartphone, it is possible to track the movement of the head of the user wearing the HMD or the smartphone, which is the electronic device 32.

Furthermore, since the position of the HMD or the smartphone, which is the electronic device 32, relative to the audio output blocks 31-1 to 31-4 is identified, the sound output from the audio output blocks 31-1 to 31-4 can be output with sound field localization corrected in accordance with the identified position. This configuration allows the user wearing the HMD, which is the electronic device 32, to experience immersive sound according to the movement of the head.

<Appearance configuration example of audio output block>

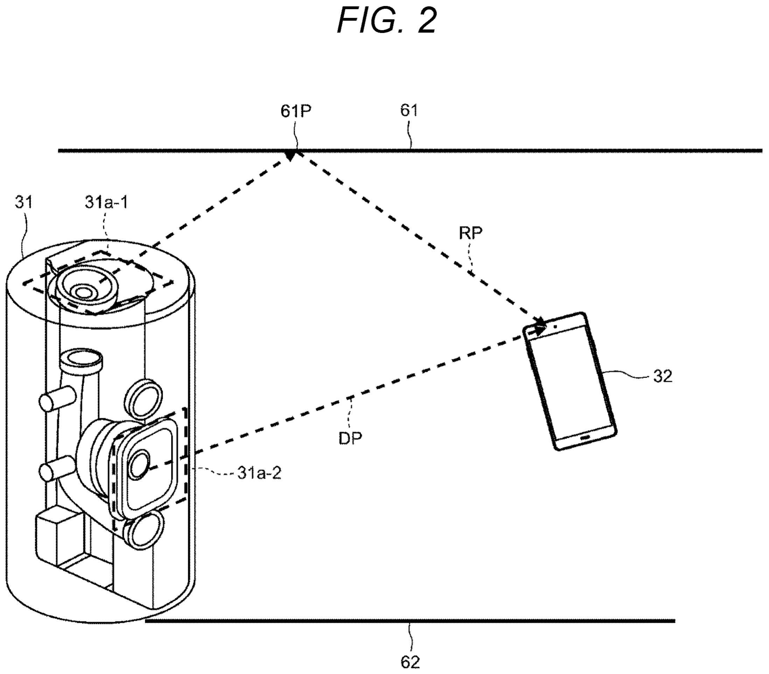

Next, an appearance configuration example of the audio output block 31 and the principle of detecting the position of the electronic device 32 will be described with reference to Fig. 2.

As illustrated in Fig. 2, the audio output block 31 includes audio output units 31a-1 and 31a-2, each of which includes a cylindrical housing and functions as a speaker, and emits sound including a spread spectrum signal.

In the audio output block 31 in Fig. 2, the audio output unit 31a-1 is directed toward a ceiling, and the audio output unit 31a-2 is directed horizontally.

Furthermore, the audio output units 31a-1 and 31a-2 may include speakers having different band characteristics, and, for example, in Fig. 2, the audio output unit 31a-1 may include an enabled speaker, and the audio output unit 31a-2 may include a woofer speaker.

Note that the arrangement example of the audio output units 31a-1 and 31a-2 in Fig. 2 is merely an example, and another arrangement may be employed. Furthermore, the audio output units 31a-1 and 31a-2 may be speakers other than the enabled speaker and the woofer speaker as long as their band characteristics are different from each other, but it is desirable that the bandwidths be different from each other in order to identify each speaker.

The electronic device 32 receives input of sound emitted from each of the audio output units 31a-1 and 31a-2 of the audio output block 31, obtains a distance to each of the audio output units 31a-1 and 31a-2 on the basis of the correlation between the spread spectrum signal and the spreading code of the received sound, and obtains the self-position on the basis of the obtained distance to each of the audio output units 31a-1 and 31a-2.

At this time, since the audio output units 31a-1 and 31a-2 in Fig. 2 have different sound emission directions and positions, there are at least two paths for sound reaching the electronic device 32.

In particular, in a case where it is assumed to be used in a room, one of the sounds emitted from the audio output units 31a-1 and 31a-2 is received as the direct wave and the other is received as the reflected wave reflected off a reflective object such as the ceiling of the room.

In Fig. 2, in the audio output block 31 placed on a floor 62, the sound transmitted from the audio output unit 31a-1 is received by the electronic device 32 as the reflected wave reflected off a ceiling 61 as indicated by a path RP. On the other hand, an example is illustrated where the sound transmitted from the audio output unit 31a-2 is received by the electronic device 32 as the direct wave as indicated by a path DP.

The position of the reflective object such as the ceiling can be identified in advance together with the position of the audio output block 31, so that the electronic device 32 can obtain the self-position using the distance to the audio output block 31 based on the direct wave and the distance to the audio output block 31 based on the reflected wave on the basis of a geometric constraint condition of the indoor space identified on the basis of the respective positions of the reflective object and the audio output block 31.

Such a configuration can achieve more robust measurement of the position of the electronic device 32 as compared to a configuration where the audio output block 31 includes only one audio output unit 31a corresponding to a speaker.

<Functional configuration example of audio output block>

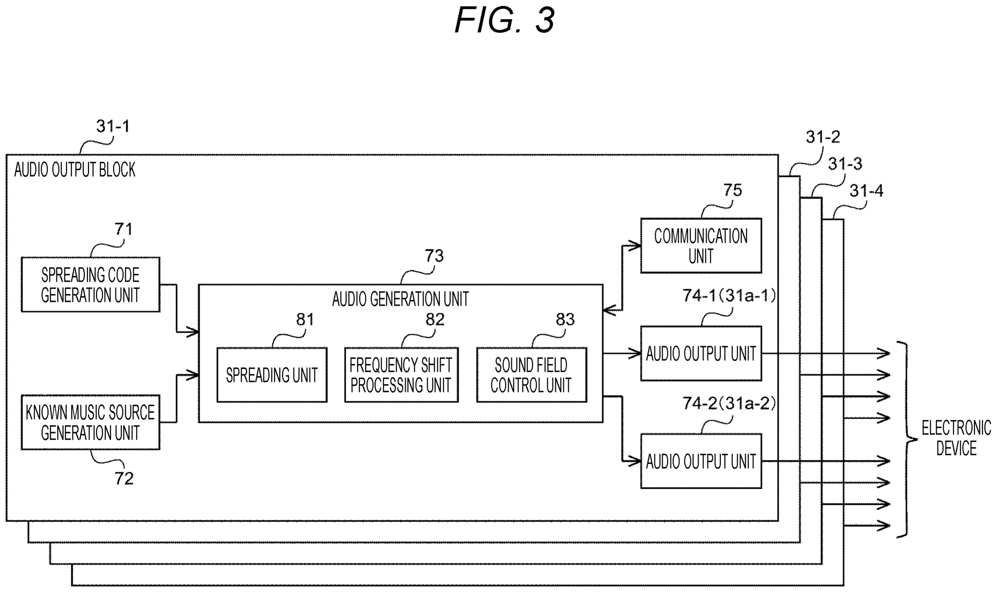

Next, functions to be implemented by the audio output block 31 will be described with reference to Fig. 3.

The audio output block 31 includes a spreading code generation unit 71, a known music source generation unit 72, an audio generation unit 73, audio output units 74-1 and 74-2, and a communication unit 75.

The spreading code generation unit 71 generates a spreading code and outputs the spreading code to the audio generation unit 73.

The known music source generation unit 72 stores known music, generates a known music source on the basis of the stored known music, and outputs the known music source to the audio generation unit 73.

The audio generation unit 73 applies spread spectrum modulation using a spreading code to the known music source to generate sound including a spread spectrum signal, and outputs the sound to the audio output units 74-1 and 74-2.

More specifically, the audio generation unit 73 includes a spreading unit 81, a frequency shift processing unit 82, and a sound field control unit 83.

The spreading unit 81 applies spread spectrum modulation using a spreading code to the known music source to generate a spread spectrum signal.

The frequency shift processing unit 82 shifts the frequency of the spreading code in the spread spectrum signal to a frequency band corresponding to the respective band characteristics of the audio output units 74-1 and 74-2.

On the basis of information regarding the position of the electronic device 32 supplied from the electronic device 32, the sound field control unit 83 reproduces the sound field according to the positional relationship with itself.

The audio output units 74-1 and 74-2 are, for example, speakers and have configurations corresponding to the audio output units 31a-1 and 31a-2 described with reference to Fig. 2. The audio output units 74-1 and 74-2 are, for example, speakers and outputs the known music source supplied from the audio generation unit 73 and the sound based on the spread spectrum signal.

The communication unit 75 is controlled by the audio generation unit 73, communicates with the electronic device 32 via Wi-Fi communication, Bluetooth (registered trademark) communication, or the like, and receives a request for sound emission to measure the position supplied from the electronic device 32. Furthermore, the communication unit 75 transmits self-position information and position information regarding the reflective object such as a ceiling to the electronic device 32 before emitting sound.

<Configuration example of electronic device>

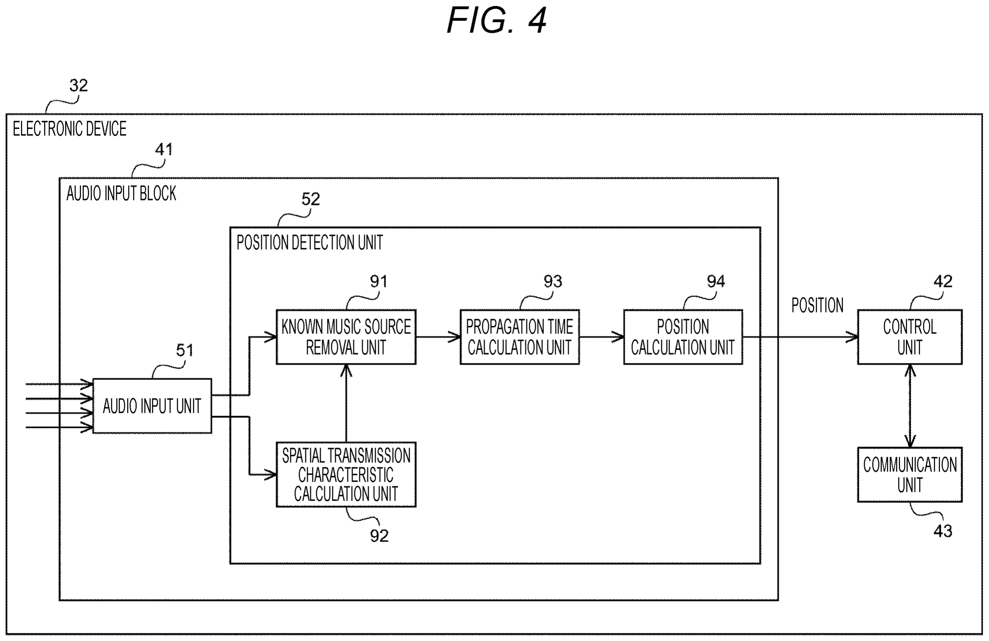

Next, a configuration example of the electronic device 32 will be described with reference to Fig. 4.

The electronic device 32 includes the audio input block 41, a control unit 42, and a communication unit 43.

The audio input block 41 receives input of sound emitted from each of the audio output blocks 31-1 to 31-4, obtains a distance to each of the audio output blocks 31-1 to 31-4 on the basis of the correlation between the spread spectrum signal and the spreading code of the received sound, obtains the self-position on the basis of the obtained distance, and outputs the self-position to the control unit 42.

In a case where the electronic device 32 is a smartphone that functions as a game controller, the control unit 42 controls, for example, the communication unit 43 on the basis of the position of the electronic device 32 supplied from the audio input block 41 to transmit a command for setting a sound field based on the position of the electronic device 32 to the audio output blocks 31-1 to 31-4.

In this case, the sound field control unit 83 of each of the audio output blocks 31-1 to 31-4 adjusts the sound output from the audio output unit 74 on the basis of the command for setting a sound field transmitted by the electronic device 32 to achieve the optimum sound field for the user possessing the electronic device 32.

The audio input unit 51 is, for example, a microphone, and collects sound emitted from each of the audio output blocks 31-1 to 31-4 and outputs the sound to the position detection unit 52.

The position detection unit 52 detects the self-position on the basis of the sound emitted from each of the audio output blocks 31-1 to 31-4 and outputs the self-position to the control unit 42.

More specifically, the position detection unit 52 includes a known music source removal unit 91, a spatial transmission characteristic calculation unit 92, a propagation time calculation unit 93, and a position calculation unit 94.

The spatial transmission characteristic calculation unit 92 calculates the spatial transmission characteristic on the basis of information regarding the sound supplied from the audio input unit 51, the characteristic of the microphone constituting the audio input unit 51, and the characteristic of the speaker constituting the audio output unit 74 of the audio output block 31, and outputs the spatial transmission characteristic to the known music source removal unit 91.

The known music source removal unit 91 stores a music source that is stored in advance in the known music source generation unit 72 of the audio output block 31 as a known music source.

Then, the known music source removal unit 91 removes the component of the known music source from the sound supplied from the audio input unit 51 in consideration of the spatial transmission characteristic supplied from the spatial transmission characteristic calculation unit 92, and outputs the result to the propagation time calculation unit 93.

That is, the known music source removal unit 91 removes the component of the known music source from the sound collected by the audio input unit 51, and outputs only the spread spectrum signal component to the propagation time calculation unit 93.

The propagation time calculation unit 93 calculates the propagation time from when sound is emitted from each of the audio output blocks 31-1 to 31-4 to when the sound is collected by the audio input unit 51 on the basis of the spread spectrum signal component included in the collected sound, and outputs the propagation time to the position calculation unit 94.

Note that the method for calculating the propagation time will be described later in detail.

The position calculation unit 94 calculates the position of the electronic device 32 on the basis of the propagation time of each of the audio output blocks 31-1 to 31-4 supplied from the propagation time calculation unit 93, and outputs the position to the control unit 42.

In order to initiate self-position measurement processing, the control unit 42 communicates with the audio output block 31 to acquire the position information regarding each audio output block 31 and the position information regarding the reflective object such as a ceiling, and outputs the position information to the position calculation unit 94.

<Principle of communication using spreading code>

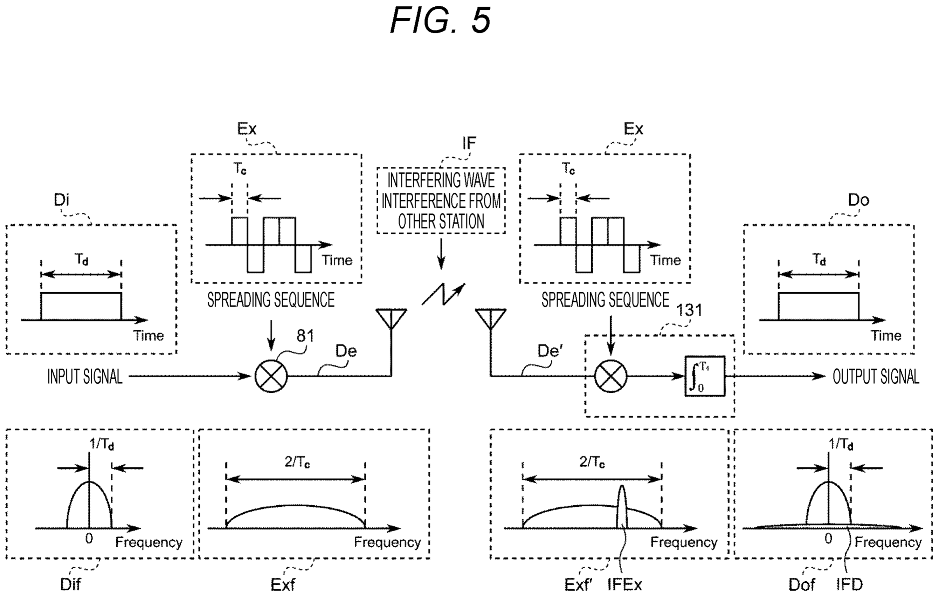

Next, the principle of communication using a spreading code will be described with reference to Fig. 5.

On the transmission side in the left part of Fig. 5, the spreading unit 81 performs spread spectrum modulation by multiplying an input signal Di having a pulse width Td to be transmitted by a spreading code Ex to generate a transmission signal De having a pulse width Tc and transmits the transmission signal De to the reception side in the right part of Fig. 5.

At this time, in a case where a frequency band Dif of the input signal Di is indicated by, for example, frequency bands -1/Td to 1/Td, a frequency band Exf of the transmission signal De is widened by being multiplied by the spreading code Ex to be frequency bands -1/Tc to 1/Tc (1/Tc > 1/Td), spreading the energy across the frequency axis.

Note that Fig. 5 illustrates an example where the transmission signal De is interfered by an interfering wave IF.

On the reception side, the transmission signal De interfered by the interfering wave IF is received as a reception signal De'.

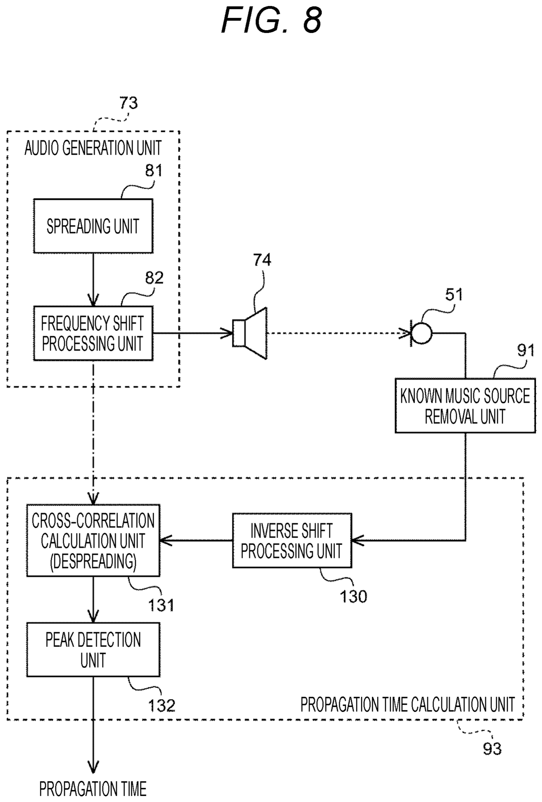

(The cross-correlation calculation unit 131 (Fig. 8) of) The propagation time calculation unit 93 restores a reception signal Do by applying despreading to the reception signal De' using the same spreading code Ex.

At this time, a frequency band Exf' of the reception signal De' includes a component IFEx of the interfering wave, but in a frequency band Dof of the despread reception signal Do, energy is spread by restoring the component IFEx of the interfering wave as a spread frequency band IFD, so that the influence of the interfering wave IF on the reception signal Do can be reduced.

That is, as described above, in communication using the spreading code, it is possible to reduce the influence of the interfering wave IF generated on the transmission path of the transmission signal De, and it is possible to improve noise resistance.

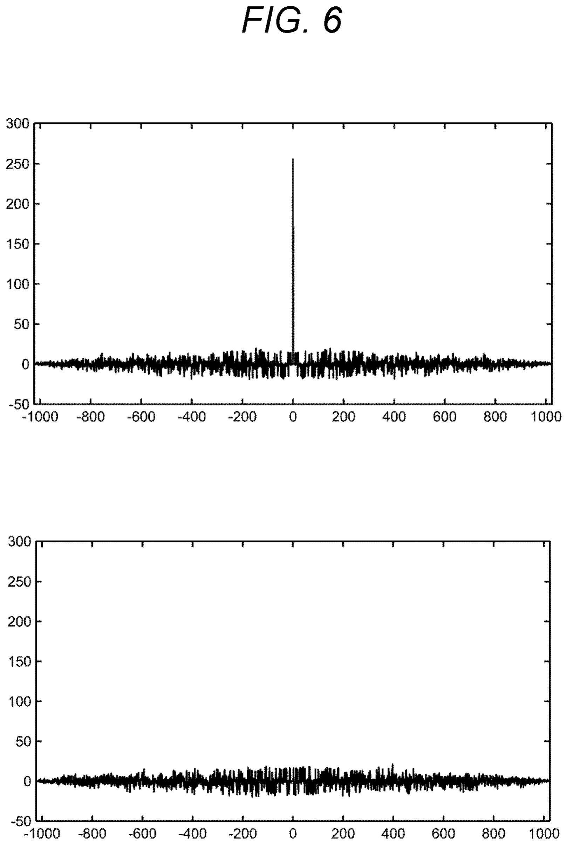

Furthermore, in the spreading code, for example, autocorrelation is in the form of an impulse as illustrated in the waveform diagram in the upper part of Fig. 6, and cross-correlation is 0 as illustrated in the waveform in the lower part of Fig. 6. Note that Fig. 6 illustrates a change in the correlation value in a case where a Gold sequence is used as the spreading code, where the horizontal axis represents the coding sequence and the vertical axis represents the correlation value.

That is, with a highly random spreading code set to each of the audio output blocks 31-1 to 31-4, the audio input block 41 can appropriately distinguish and recognize the spectrum signal included in the sound for each of the audio output blocks 31-1 to 31-4.

Moreover, with highly random spreading codes set to the audio output units 74-1 and 74-2 as well, the audio input block 41 can distinguish and recognize the spectrum signal for each of the audio output blocks 31-1 to 31-4 and further for each of the audio output units 74-1 and 74-2.

The spreading code may be not only a Gold sequence but also an M sequence, pseudorandom noise (PN), or the like.

<Method for calculating propagation time by propagation time calculation unit>

The timing at which the peak of the observed cross-correlation is observed in the audio input block 41 is the timing at which the sound emitted by the audio output block 31 is collected in the audio input block 41, and thus differs depending on the distance between the audio input block 41 and the audio output block 31.

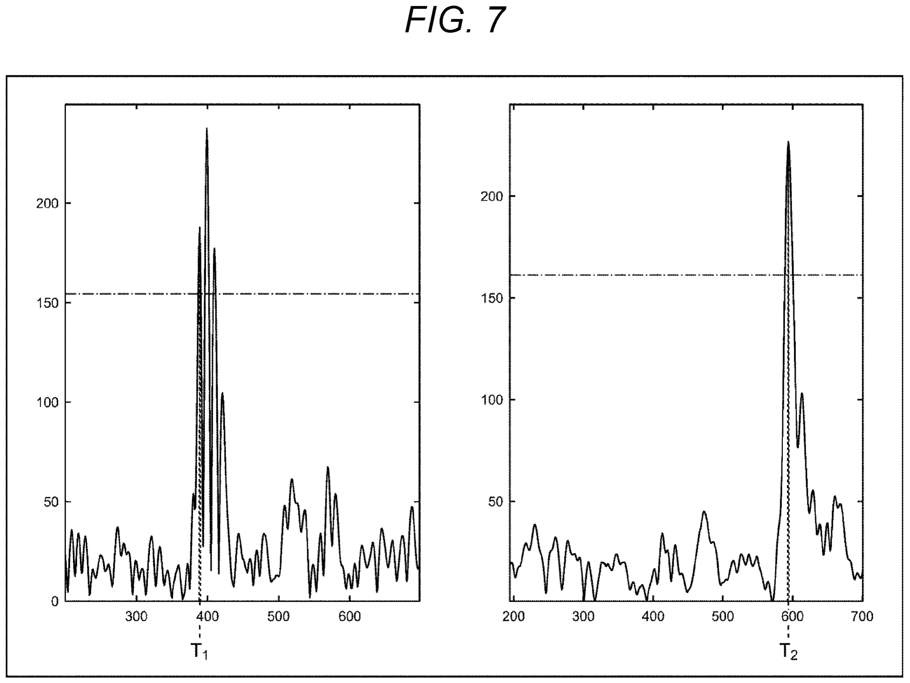

That is, for example, when the distance between the audio input block 41 and the audio output block 31 is a first distance and a peak is detected at time T1 as illustrated in the left part of Fig. 7, when the distance between the audio input block 41 and the audio output block 31 is a second distance longer than the first distance, the peak is observed at time T2 (> T1) as illustrated in the right part of Fig. 7.

Note that in Fig. 7, the horizontal axis represents the elapsed time from when sound is output from the audio output block 31, and the vertical axis represents the strength of cross-correlation.

That is, the distance between the audio input block 41 and the audio output block 31 can be obtained by multiplying the time from when sound is emitted from the audio output block 31 to when the peak is observed in the cross-correlation, that is, the propagation time from when sound is emitted from the audio output block 31 to when the sound is collected in the audio input block 41 by the sound velocity.

<Configuration example of propagation time calculation unit>

Next, a configuration example of the propagation time calculation unit 93 will be described with reference to Fig. 8.

The propagation time calculation unit 93 includes an inverse shift processing unit 130, a cross-correlation calculation unit 131, and a peak detection unit 132.

The inverse shift processing unit 130 restores, to the original frequency band by downsampling, a spreading code signal subjected to the spread spectrum modulation, which has been frequency-shifted by upsampling in the frequency shift processing unit 82 of the audio output block 31, in an audio signal collected by the audio input unit 51, and outputs the restored signal to the cross-correlation calculation unit 131.

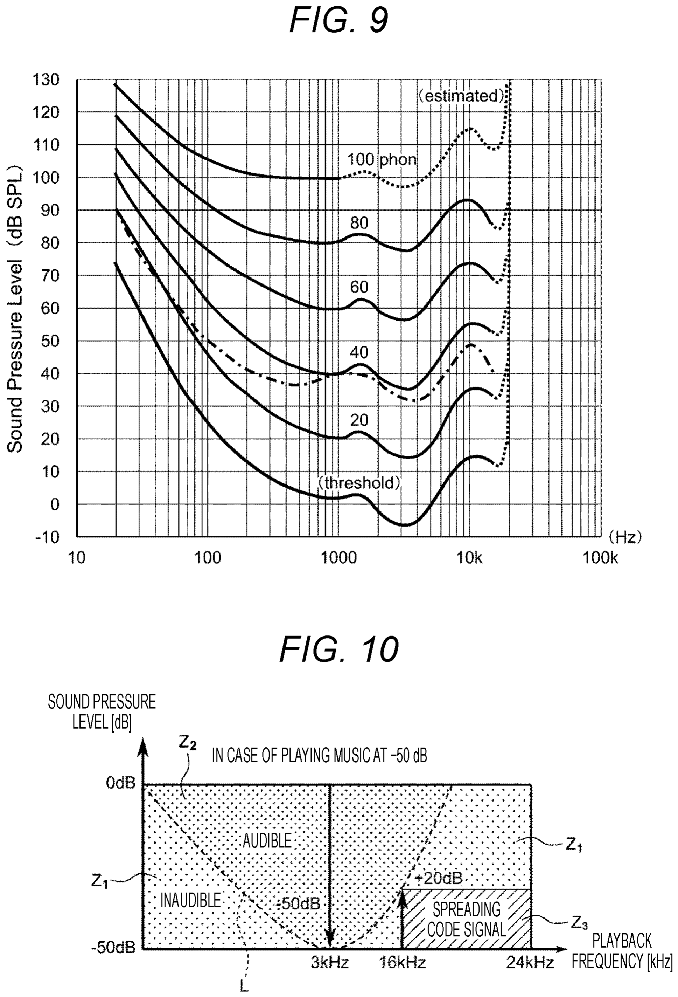

Note that the shifting of the frequency band by the frequency shift processing unit 82 and the restoring of the frequency band by the inverse shift processing unit 130 will be described later in detail with reference to Fig. 10.

The cross-correlation calculation unit 131 calculates cross-correlation between the spreading code and the reception signal obtained by removing the known music source from the audio signal collected by the audio input unit 51 of the audio input block 41, and outputs the cross-correlation to the peak detection unit 132.

The peak detection unit 132 detects a peak time in the cross-correlation calculated by the cross-correlation calculation unit 131 and outputs the peak time as a propagation time.

Here, since the calculation of cross-correlation performed in the cross-correlation calculation unit 131 is generally known to have exceptionally large computational complexity, the calculation is achieved by equivalent calculation with less computational complexity.

Specifically, the cross-correlation calculation unit 131 performs Fourier transform on each of the transmission signal output as sound by the audio output unit 74 of the audio output block 31 and the reception signal obtained by removing the known music source from the audio signal received by the audio input unit 51 of the audio input block 41, as expressed by the following equations (1) and (2).

[Math. 1]

$$G(f) = \int_{-\infty}^{\infty} g\left(\frac{V-v}{V}t\right) \exp\left(-i2\pi ft\right) dt \qquad \cdot\cdot\cdot \quad (1)$$

[Math. 2]

$$H(f) = \int_{-\infty}^{\infty} h(t) \exp(-i2\pi ft) dt \qquad \cdots \quad (2)$$

Here, g represents the reception signal obtained by removing the known music source from the audio signal received by the audio input unit 51 of the audio input block 41, and G represents a result of Fourier transform performed on the reception signal g obtained by removing the known music source from the audio signal received by the audio input unit 51 of the audio input block 41.

Furthermore, h represents the transmission signal to be output by the audio output unit 74 of the audio output block 31, and H represents a result of Fourier transform performed on the transmission signal to be output by the audio output unit 74 of the audio output block 31.

Moreover, V represents the sound velocity, v represents the velocity of (the audio input unit 51 of) the electronic device 32, t represents time, and f represents frequency.

Next, the cross-correlation calculation unit 131 obtains a cross spectrum by mutually multiplying the results G and H of the Fourier transform as expressed by the following equation (3).

[Math. 3]

$$P(f) = G(f) H(f) \qquad \cdots \quad (3)$$

Here, P represents a cross spectrum obtained by mutually multiplying the results G and H of the Fourier transform.

Then, as expressed by the following equation (4), the cross-correlation calculation unit 131 performs inverse Fourier transform on the cross spectrum P to obtain cross-correlation between the transmission signal h output by the audio output unit 74 of the audio output block 31 and the reception signal g obtained by removing the known music source from the audio signal received by the audio input unit 51 of the audio input block 41.

[Math. 4]

$$p(t) = \int_{-\infty}^{\infty} P(t) \exp(-i2\pi ft) df \qquad \cdots \quad (4)$$

Here, p represents cross-correlation between the transmission signal h output by the audio output unit 74 of the audio output block 31 and the reception signal g obtained by removing the known music source from the audio signal received by the audio input unit 51 of the audio input block 41.

Then, the distance between the audio input block 41 and the audio output block 31 is obtained by calculating the following equation (5) on the basis of the propagation time T obtained on the basis of the peak of the cross-correlation p.

[Math. 5]

$$D = T \times V$$

$$\cdots (5)$$

Here, D represents the distance between (the audio input unit 51 of) the audio input block 41 and (the audio output unit 74 of) the audio output block 31, T represents the propagation time, and V represents the sound velocity. Furthermore, the sound velocity V is, for example, $331.5 + 0.6 \times Q$ (m/s) (Q is temperature °C).

Note that the cross-correlation calculation unit 131 may further obtain the velocity v of (the audio input unit 51 of) the electronic device 32 by obtaining the cross-correlation p.

More specifically, the cross-correlation calculation unit 131 obtains the cross-correlation p while changing the velocity v in a predetermined range (e.g., -1.00 m/s to 1.00 m/s) in a predetermined step (e.g., 0.01 m/s step), and obtains the velocity v indicating the maximum peak of the cross-correlation p as the velocity v of (the audio input unit 51 of) the electronic device 32.

It is also possible to obtain the absolute speed of (the audio input block 41 of) the electronic device 32 on the basis of the velocity v obtained for each of the audio output blocks 31-1 to 31-4.

<Frequency shift>

The frequency band of the spreading code signal is a Nyquist frequency Fs that is a half of the sampling frequency, and, for example, in a case where the Nyquist frequency Fs is 8 kHz, the frequency band is set to 0 kHz to 8 kHz that is lower than the Nyquist frequency Fs.

Incidentally, as illustrated in Fig. 9, it is known that human hearing has high sensitivity to sound in a frequency band around 3 kHz regardless of loudness levels, decreases from around 10 kHz, and humans can hardly hear when exceeding 20 kHz.

Fig. 9 illustrates a change in the sound pressure level for each frequency at each of loudness levels 0, 20, 40, 60, 80, and 100 phon, where the horizontal axis represents the frequency and the vertical axis represents the sound pressure level. Note that the thick alternate long and short dash line indicates the sound pressure level of the microphone, and indicates that the sound pressure level is constant regardless of the loudness levels.

Therefore, in a case where the frequency band of the spread spectrum signal is 0 kHz to 8 kHz, when the sound of the spreading code signal is emitted together with the sound of the known music source, there is a possibility that the sound of the spreading code signal is perceived as noise by human hearing.

For example, in a case where it is assumed that music is reproduced at -50 dB, a range below a sensitivity curve L in Fig. 10 is set as a range Z1 inaudible to humans (range difficult to recognize by human hearing), and a range above the sensitivity curve L is set as a range Z2 audible to humans (range easy to recognize by human hearing).

In Fig. 10, the horizontal axis represents the frequency band, and the vertical axis represents the sound pressure level.

Therefore, for example, when the range in which the sound of the reproduced known music source and the sound of the spreading code signal can be separated from each other is within -30 dB, the sound of a spreading code signal output in the range of 16 kHz to 24 kHz indicated by a range Z3 within the range Z1 can be made inaudible to humans (made difficult to recognize by human hearing).

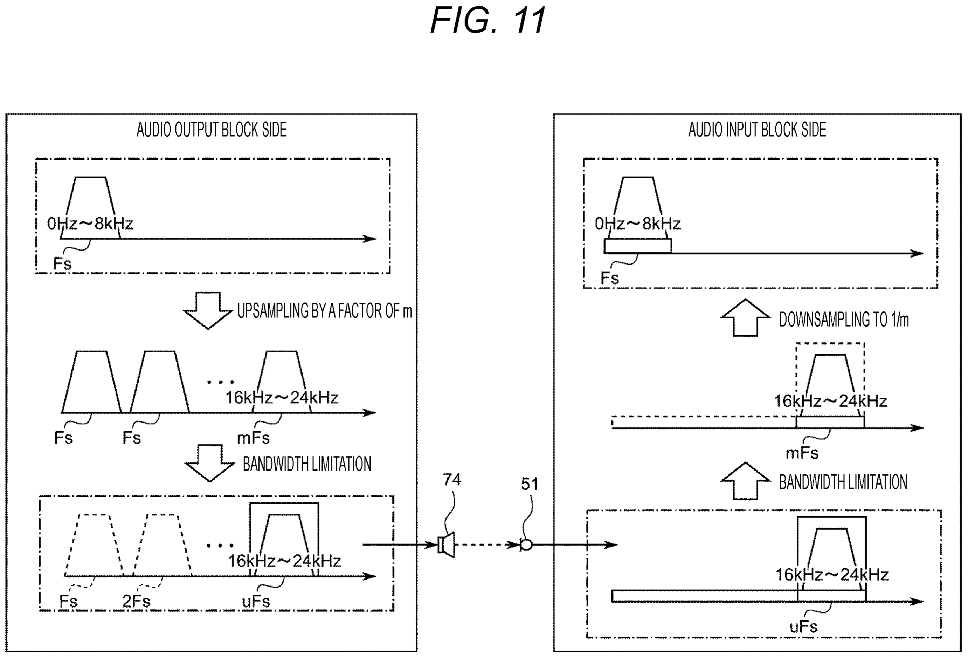

Hence, as illustrated in the upper left part of Fig. 11, the frequency shift processing unit 82 upsamples a spreading code signal Fs including the spreading code by a factor of m as illustrated in the middle left part to generate spreading code signals Fs, 2Fs,... mFs.

Then, as illustrated in the lower left part of Fig. 11, the frequency shift processing unit 82 applies band limitation to a spreading code signal uFs of 16 kHz to 24 kHz which is the frequency band inaudible to humans described with reference to Fig. 10 to frequency-shift the spreading code signal Fs including the spreading code signal and causes the audio output unit 74 to emit sound together with the known music source.

As illustrated in the lower right part of Fig. 11, the inverse shift processing unit 130 extracts the spreading code signal uFs as illustrated in the middle right part of Fig. 11 by limiting the band to the range of 16 kHz to 24 kHz with respect to the sound obtained by removing, by the known music source removal unit 91, the known music source from the sound collected by the audio input unit 51.

Then, as illustrated in the upper right part of Fig. 10, the inverse shift processing unit 130 performs down-sampling to 1/m to generate the spreading code signal Fs including the spreading code, thereby restoring the frequency band to the original band.

By performing the frequency shift in this manner, even if the sound including the spreading code signal is emitted in a state where the sound of the known music source is emitted, it is possible to make the sound including the spreading code signal less audible (less recognizable by human hearing).

Note that, in the above, an example has been described where the sound including the spreading code signal is made less audible to humans (made difficult to be recognized by human hearing) by the frequency shift. However, since high frequency sound has high rectilinearity and is susceptible to multipath due to reflection from a wall or the like and sound blocking by an obstacle, it is also possible to assign it to the audio output unit 74-1 (31a-1) in Fig. 2 to propagate the spreading code signal by the reflected wave through the path RP.

Furthermore, in a similar manner, it is also possible to assign a frequency band that is lower than 3 kHz as a peak and is difficult to be recognized by human hearing to the audio output unit 31a-2 in Fig. 2 to propagate the spreading code signal by the direct wave through the path DP.

<Method for obtaining position of electronic device (time of arrival (TOA) positioning)>

Next, how to obtain the position of (the audio input unit 51-i of) the electronic device 32 on the basis of a distance Dik between (the audio input unit 51-i of) the electronic device 32 and the audio output block 31-k will be described. There are various methods for obtaining the position of (the audio input unit 51-i of) the electronic device 32, and time of arrival (TOA) positioning and time difference of arrival (TDOA) positioning are widely known.

Time of arrival (TOA) positioning is a method for obtaining the position of a reception-side device on the basis of a distance relationship between the reception-side device and a plurality of transmission-side devices whose positions are known.

On the other hand, time difference of arrival (TDOA) positioning is a method for obtaining the position of the reception-side device on the basis of a distance difference relationship between the reception-side device and the plurality of transmission-side devices whose positions are known.

First, time of arrival (TOA) positioning will be described. Here, it is assumed that the position of (the audio output unit 74 of) the audio output block 31 serving as the transmission-side device is known.

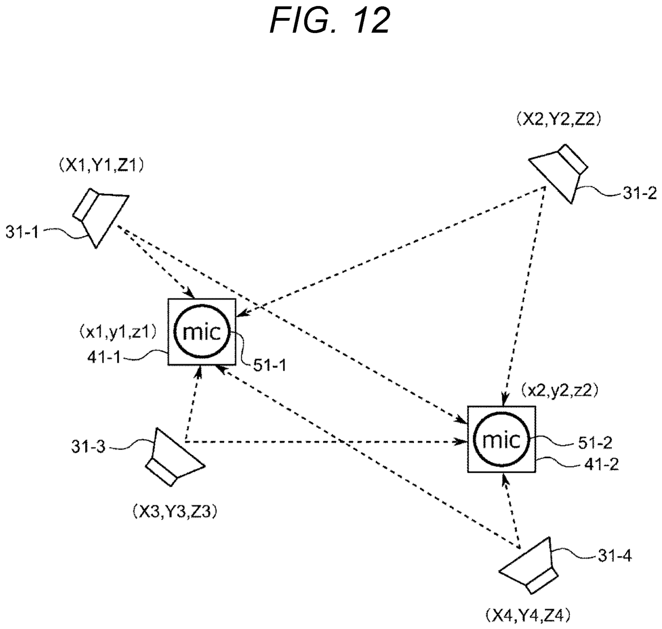

For example, as illustrated in Fig. 12, it is assumed that the position of (the audio output unit 74-1 of) the audio output block 31-1 is (X1, Y1, Z1), the position of (the audio output unit 74-2 of) the audio output block 31-2 is (X2, Y2, Z2), the position of (the audio output unit 74-3 of) the audio output block 31-3 is (X3, Y3, Z3), and the position of (the audio output unit 74-4 of) the audio output block 31-4 is (X4, Y4, Z4).

Furthermore, it is assumed that the position of the audio input unit 51-1 (of the audio input block 41-1 of the electronic device 32-1) is (x1, y1, z1) and the position of the audio input unit 51-2 (of the audio input block 41-2 of the electronic device 32-2) is (x2, y2, z2).

These are generalized such that the position of (the audio output unit 74-k of) the audio output block 31-k is (Xk, Yk, Zk) and the position of the audio input unit 51-i (of the audio input block 41-i of the electronic device 32-i) is (xi, yi, zi).

In this case, the distance Dik between (the audio output unit 74-k of) the audio output block 31-k and the audio input unit 51-i (of the audio input block 41-i of the electronic device 32-i) is expressed by the following equation (6).
[Math. 6]

$$\sqrt{(x_i - XK)^2 + (y_i - YK)^2 + (z_i - ZK)^2} + D_s = Dik \qquad \cdot \cdot \cdot \quad (6)$$

Here, Ds represents a distance offset corresponding to system delay between the audio output block 31 and the audio input block 41.

Therefore, in a case where the respective distances Di1 to Di4 between the audio input unit 51-i (of the audio input block 41-i of the electronic device 32-i) and (the audio output units 74 of) the audio output blocks 31-1 to 31-4 are obtained, the position (xi, yi, zi) of the audio input unit 51-i (of the audio input block 41-i of the electronic device 32-i) can be obtained by solving simultaneous equations expressed by the following equation (7).

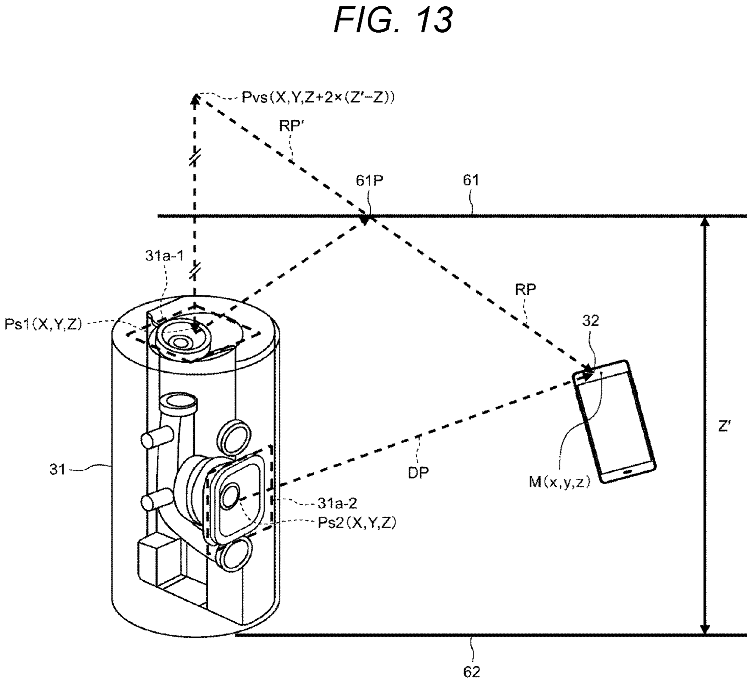

Note that, here, the description will be made focusing on only the audio output unit 74-2 that emits sound to be collected as the direct wave by the electronic device 32 of the audio output units 74-1 and 74-2 corresponding to the audio output units 31a-1 and 31a-2, but a similar equation is basically generated for the reflected wave as well. Furthermore, a case where the reflected wave is used will be described later in detail with reference to Fig. 13.
[Math. 7]

$$\sqrt{(x_i - X1)^2 + (y_i - Y1)^2 + (z_i - Z1)^2} + D_s = Di1$$
$$\sqrt{(x_i - X2)^2 + (y_i - Y2)^2 + (z_i - Z2)^2} + D_s = Di2$$
$$\sqrt{(x_i - X3)^2 + (y_i - Y3)^2 + (z_i - Z3)^2} + D_s = Di3 \qquad \cdot \cdot \cdot \quad (7)$$
$$\sqrt{(x_i - X4)^2 + (y_i - Y4)^2 + (z_i - Z4)^2} + D_s = Di4$$

Note that, in the above, in a case where a distance offset Ds corresponding to a time offset caused by operation delay is known, the number of unknowns is three, and it is sufficient to have three simultaneous equations; therefore, if the positions of three audio output units 74 are known, it is possible to obtain the solution.

<Coordinate system in case of using reflected wave>

In a case of using the reflected wave, it is necessary to set the coordinate system of the audio output block 31 to ensure that a specular positional relationship with respect to the reflective object by which sound is reflected is established.

For example, as illustrated in Fig. 13, consider a case where the reflective object is the ceiling, and the sound emitted from the audio output block 31 is reflected off the ceiling and reaches the electronic device 32.

Here, the positional coordinates of the audio output units 31a-1 and 31a-2 of the audio output block 31 are Ps1(X, Y, Z) and Ps2(X, Y, Z), respectively, the position coordinates of the electronic device are M(x, y, z), and the height of the ceiling 61 is Z'.

Note that it is assumed that the audio output unit 31a-1 serving as a speaker that emits sound to be the reflected wave and the audio output unit 31a-2 serving as a speaker that emits sound to be the direct wave are located sufficiently close to each other compared to the distance to the electronic device 32, and are expressed by the same positional coordinates Ps1(X, Y, Z) and Ps2(X, Y, Z).

In this case, the distance between the audio output unit 31a-1 and the electronic device 32 through the path DP of the direct wave is a distance between the position Ps1(X, Y, Z) of the audio output unit 31a-1 and the position M(x, y, z) of the electronic device 32, and is expressed by $\sqrt{((X - x)^2 + (Y - y)^2 + (Z - z)^2)}$ + Ds.

On the other hand, the distance of the path RP through which the reflected wave propagates is calculated with a position Pvs(X, Y, Z + 2(Z' - Z)) having a specular relationship with the position Ps1(X, Y, Z) of the audio output unit 31a-1 across the ceiling 61 in the Z direction considered as the position of the audio output block 31.

Therefore, the distance of the propagation path RP of the reflected wave is a distance between the position Pvs (X, Y, Z+2(Z' - Z)), which is in a specular relationship with the position Ps1 (X, Y, Z) of the audio output unit 31a-1 across the ceiling 61, and the position M(x, y, z) of the electronic device 32, and is expressed by $\sqrt{((X - x)^2 + (Y - y)^2 + (Z - (Z+2(Z' - z))^2)}$ + Ds. That is, an equation generated using such a coordinate system is generated for each audio output block 31, and simultaneous equations corresponding to equation (7) are generated.

Note that, although Fig. 13 illustrates an example where the reflective object is a ceiling, it is necessary to set a coordinate system in a similar manner even in a case where a different object is the reflective object.

<Method for obtaining position of electronic device (time of difference of arrival (TDOA) positioning)>

As described above, in a case of the method for obtaining the position of the electronic device on the basis of time of arrival (TOA) positioning, in order to measure the above-described propagation time, the transmission time and the reception time need to be strictly managed, making complete synchronization of clocks used in the audio input unit 51 and the audio output block 31 (of the audio input block 41 of the electronic device 32) a mandatory requirement.

In reality, however, it is difficult to achieve complete synchronization of the clocks of the audio input unit 51 and the audio output block 31 (of the audio input block 41 of the electronic device 32).

Therefore, in time difference of arrival (TDOA) positioning, the use of differences in distance between the electronic device 32 and the audio output blocks 31-1 to 31-i compensates for an error caused by asynchronous clocks used for measuring the distance and eliminates the need for clock synchronization. Note that synchronization is not required for the clocks used in the electronic device 32 and the audio output block 31, but the timing of the sounds emitted from the audio output blocks 31-1 to 31-4 needs to be synchronized.

More specifically, it can be obtained by solving simultaneous equations as expressed by the following equation (8).

[Math. 8]

$$Di2 - Di1 = V(t2 - t1) = \left( \sqrt{(x_i - X2)^2 + (y_i - Y2)^2 + (z_i - Z2)^2} + D_s \right)$$
$$- \left( \sqrt{(x_i - X1)^2 + (y_i - Y1)^2 + (z_i - Z1)^2} + D_s \right)$$
$$Di3 - Di1 = V(t3 - t1) = \left( \sqrt{(x_i - X3)^2 + (y_i - Y3)^2 + (z_i - Z3)^2} + D_s \right)$$
$$- \left( \sqrt{(x_i - X1)^2 + (y_i - Y1)^2 + (z_i - Z1)^2} + D_s \right)$$
$$Di4 - Di1 = V(t4 - t1) = \left( \sqrt{(x_i - X4)^2 + (y_i - Y4)^2 + (z_i - Z4)^2} + D_s \right)$$
$$- \left( \sqrt{(x_i - X1)^2 + (y_i - Y1)^2 + (z_i - Z1)^2} + D_s \right)$$

$$\cdots (8)$$

Note that, in equation (8), t1, t2, t3, t4,... represent the arrival time of the sounds emitted from the audio output blocks 31-1 to 31-4. Furthermore, although the above-described equation (8) only represents the equations for the direct wave, equations for the reflected wave are also generated in a similar manner.

<Constraint condition for distinguishing between direct wave and reflected wave>

In the present disclosure, unless the spreading code signal acquired from the direct wave and the spreading code signal acquired from the reflected wave are processed distinctly and separately, as described above, the simultaneous equations as expressed by equation (8) cannot be generated, making it difficult to perform appropriate position measurement.

The spreading code signal acquired from the direct wave and the spreading code signal acquired from the reflected wave are obtained from a peak acquired from the direct wave and a peak acquired from the reflected wave, respectively; however, in each case, a peak caused by reflection other than the first peak to be originally obtained may also be detected, making it necessary to appropriately select a pair of peaks to be detected first.

Therefore, on the basis of first to third constraint conditions based on the geometric constraint of the space where the audio output block 31 is placed, the first peaks to be detected of the direct wave and the reflected wave from the same audio output block 31 are detected separately.

<First constraint condition>

The first constraint condition is a condition where, in a case where the installation position of the audio output block 31 is known, the range of the timing at which the peak of the reflected wave is detected is identified on the basis of the timing at which the peak of the direct wave is detected.

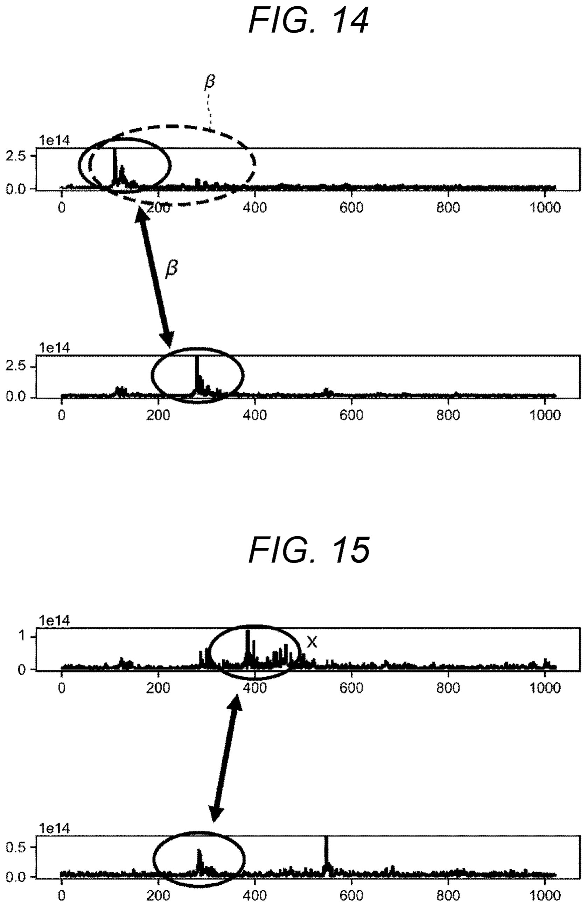

For example, as illustrated in the upper part of Fig. 14, in a case where the peak of the direct wave is detected, the peak of the reflected wave is detected with a certain time delay as illustrated in the lower part of Fig. 14.

Since the position of the audio output block 31 can be recognized in advance and the distance can be obtained only on the basis of the direct wave, it is possible to estimate that the peak of the reflected wave is detected within a predetermined range $\beta$ indicated by a dotted line in Fig. 14 relative to the peak of the direct wave, for example. Therefore, when the peak of the direct wave satisfying this condition indicated by the dotted line in Fig. 14 is used as a reference, the peak of the reflected wave is selected within the predetermined range $\beta$ that has been identified.

<Second constraint condition>

The second constraint condition is a condition where the peak of the direct wave is detected earlier than the peak of the reflected wave.

That is, the path of the reflected wave becomes longer than the path of the direct wave due to the geometric constraint. Therefore, as indicated by the peak of the direct wave in the upper part of Fig. 14 and the peak of the reflected wave in the lower part of Fig. 14, the peak of the reflected wave appears after the peak of the direct wave.

Therefore, for example, when the peak of the direct wave in the upper part of Fig. 15 and the peak of the reflected wave as illustrated in the lower part of Fig. 15 are detected, the direct wave circled with a round mark in the upper part of Fig. 15 is not selected as the direct wave since the peak of the direct wave appears later than the peak of the reflected wave in the lower part of Fig. 15.

<Third constraint condition>

The third constraint condition is a condition where when the peak of the direct wave and the peak of the reflected wave appear at almost the same timing, there is a possibility that the peak of the reflected wave and the peak of the direct wave have already been detected.

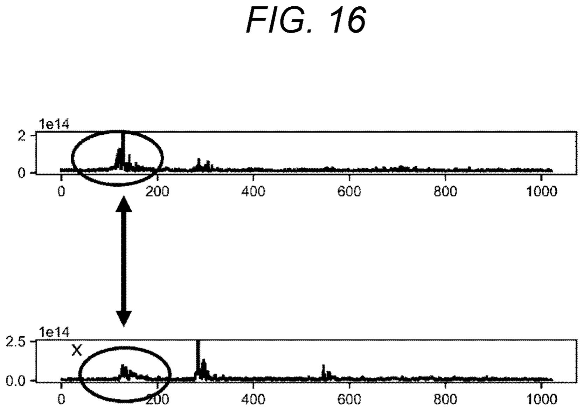

For example, in a case where the peak of the direct wave is detected as illustrated in the upper part of Fig. 16, when the peak of the reflected wave is detected at almost the same timing as illustrated in the lower part of Fig. 16, there is a high possibility that the peak of the reflected wave and the peak of the direct wave have already been detected. It is therefore necessary to ensure that such a peak of the reflected wave is not selected.

That is, as described above, in accordance with the first to third constraint conditions, a first timing pair of the peak of the direct wave and the peak of the reflected wave, the peak of the direct wave appearing before the peak of the reflected wave, both the peaks being separated by approximately the range $\beta$, are selected from among a plurality of peaks of the direct wave and a plurality of peaks of the reflected wave.

This makes it possible to robustly select appropriate peaks of the direct wave and the reflected wave.

<Position measurement processing>

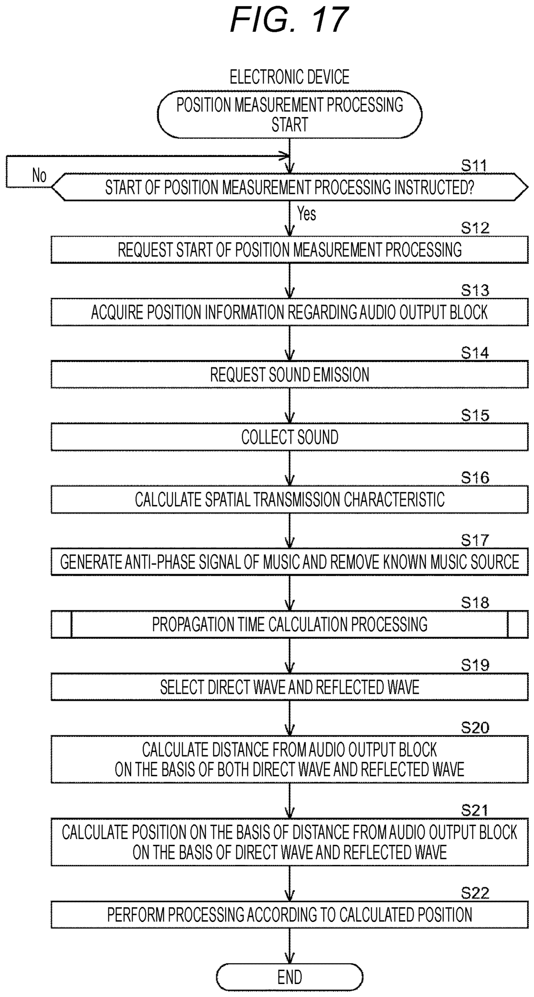

Next, position measurement processing by the audio output block 31 and the electronic device 32 will be described with reference to the flowcharts in Figs. 17 to 19.

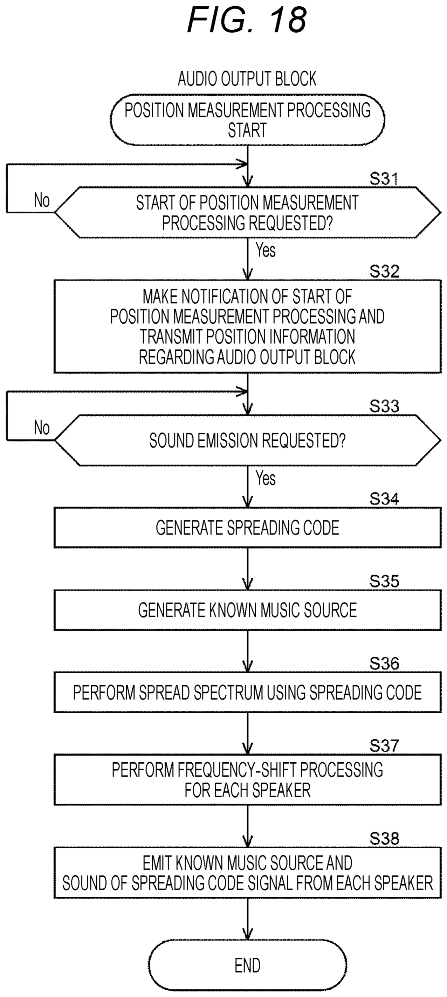

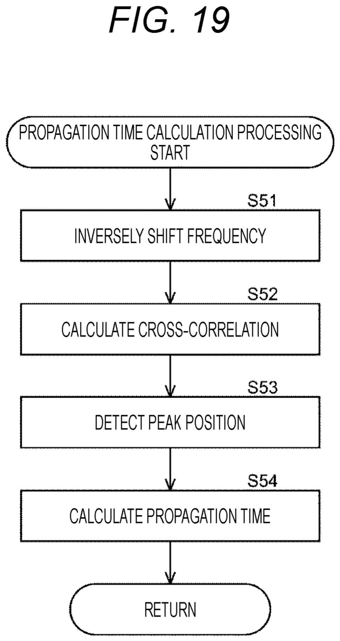

Note that Fig. 17 is a flowchart for describing processing of the electronic device 32, and Fig. 18 is a flowchart for describing processing of the audio output block 31. Fig. 19 is a flowchart for describing propagation time calculation processing in step S18 in Fig. 17.

In step S11 (Fig. 17), the control unit 42 of the electronic device 32 determines whether or not an instruction to start the position measurement processing has been issued by the user operating an operation unit or the like (not illustrated), and repeats a similar process until the instruction is received.

Then, in step S11, in a case where the start of the position measurement processing has been instructed, the processing proceeds to step S12.

In step S12, the control unit 42 controls the communication unit 43 to request the audio output block 31 to start the position measurement processing.

In step S31 (Fig. 18), the audio generation unit 73 of the audio output block 31 controls the communication unit 75 to determine whether or not the electronic device 32 has requested the start of the position measurement processing, and repeats a similar process until the request is received.

Then, in step S31, in a case where the electronic device 32 has requested the start of the position measurement processing, the processing proceeds to step S32.

In step S32, the audio generation unit 73 controls the communication unit 75 to transmit the self-potion information to the electronic device 32 together with information indicating the start of the position measurement processing. Through this process, the position information regarding each of the audio output blocks 31-1 to 31-4 is transmitted from the audio output blocks 31-1 to 31-4 to the electronic device 32.

In step S13 (Fig. 17), the control unit 42 of the electronic device 32 controls the communication unit 43 to acquire the information indicating the start of the position measurement processing and the position information supplied from the audio output block 31, and supplies the acquired information to the position calculation unit 94.

In step S14, the control unit 42 controls the communication unit 43 to request the audio output block 31 to emit sound.

In step S33 (Fig. 18), the audio generation unit 73 of the audio output block 31 controls the communication unit 75 to determine whether or not sound emission has been requested, and repeats a similar process until sound emission is requested.

Then, in step S33, when sound emission has been requested, the processing proceeds to step S34.

In step S34, the audio generation unit 73 controls the spreading code generation unit 71 to generate and acquire a spreading code.

In step S35, the audio generation unit 73 controls the known music source generation unit 72 to generate and acquire a stored known music source.

In step S36, the audio generation unit 73 controls the spreading unit 81 to perform spread spectrum modulation on a predetermined data code by multiplying the predetermined data code by the spreading code to generate a spreading code signal.

In step S37, the audio generation unit 73 controls the frequency shift processing unit 82 to frequency-shift the spreading code signal according to the respective frequency characteristics of the audio output units 74-1 and 74-2 as described with reference to the left part of Fig. 11.

In step S38, the audio generation unit 73 outputs the known music source and the frequency-shifted spreading code signal to the audio output units 74-1 and 74-2, each including a speaker, to emit (output) the signal as sound.

By performing the above processing in each of the audio output blocks 31-1 to 31-4, it is possible to emit sound and allow the user who possesses the electronic device 32 to listen to the sound as the known music source.

Furthermore, since the spreading code signal can be shifted to a frequency band inaudible to humans including the user and be output as sound, the electronic device 32 can measure the distance to the audio output block 31 on the basis of the emitted sound including the spreading code signal shifted to a frequency band inaudible to humans without causing the user to hear unpleasant sound.

In step S15 (Fig. 17), the audio input unit 51 including a microphone collects sound and outputs the collected sound to the known music source removal unit 91 and the spatial transmission characteristic calculation unit 92 of the position detection unit 52.

In step S16, the spatial transmission characteristic calculation unit 92 calculates the spatial transmission characteristic on the basis of the sound supplied from the audio input unit 51, the characteristic of the audio input unit 51, and the characteristics of the audio output units 74-1 and 74-2 of the audio output block 31, and outputs the spatial transmission characteristic to the known music source removal unit 91.

In step S17, the known music source removal unit 91 generates an anti-phase signal of the known music source in consideration of the spatial transmission characteristic supplied from the spatial transmission characteristic calculation unit 92, removes a component of the known music source from the sound supplied from the audio input unit 51, and outputs the result to the propagation time calculation unit 93.

In step S18, the propagation time calculation unit 93 performs the propagation time calculation processing to calculates the propagation time for the sound output from the audio output block 31 to the audio input unit 51.

<Propagation time calculation processing>

Here, the propagation time calculation processing by the propagation time calculation unit 93 will be described with reference to the flowchart in Fig. 19.

In step S51, the inverse shift processing unit 130 inversely shifts the frequency band of the spreading code signal obtained by removing the known music source from the sound input by the audio input unit 51 supplied from the known music source removal unit 91 as described with reference to the right part of Fig. 11.

In step S52, the cross-correlation calculation unit 131 calculates cross-correlation between the spreading code signal obtained by inversely shifting the frequency band and removing the known music source from the sound input by the audio input unit 51 and the spreading code signal of the sound output from the audio output block 31 by the calculation using the equations (1) to (4) described above.

In step S53, the peak detection unit 132 detects a peak in the calculated cross-correlation.

In step S54, the peak detection unit 132 outputs the time detected as the peak in cross-correlation to the position calculation unit 95 as the propagation time.

Note that the propagation time corresponding to each of the plurality of audio output blocks 31 is obtained by calculating the cross-correlation with the spreading code signal of the sound output from each of the plurality of audio output blocks 31.

Here, the description returns to the flowchart in Fig. 17.

In step S19, the position calculation unit 95 selects a direct wave and a reflected wave for each of the audio output blocks 31 in accordance with the first to third constraint conditions described with reference to Figs. 14 to 16 on the basis of the propagation time corresponding to each of the plurality of audio output blocks 31.

In step S20, the position calculation unit 95 calculates a distance based on the direct wave and a distance based on the reflected wave for each of the plurality of audio output blocks 31.

In step S21, the position calculation unit 95 generates simultaneous equations including the above-described equation (7) or equation (8) in which the self-position is an unknown from the distance based on the direct wave and the distance based on the reflected wave for each of the plurality of audio output blocks 31, solves the simultaneous equations to calculate the self-position, and outputs the result to the control unit 42.

In step S22, the control unit 42 performs processing on the basis of the position of the electronic device 32 that is the obtained self-position, and ends the processing.

For example, the control unit 42 controls the communication unit 43 to transmit a command for controlling the level and timing of the sound output from each of the audio output units 74 of the audio output blocks 31-1 to 31-4 to the audio output blocks 31-1 to 31-4 so that a sound field based on the obtained position of the electronic device 32 can be achieved.

As a result, in the audio output blocks 31-1 to 31-4, the sound field control unit 83 controls the level and timing of the sound output from the audio output unit 74 so as to achieve the sound field corresponding to the position of the user who possesses the electronic device 32 on the basis of the command transmitted from the electronic device 32.

Through the above series of processing, the position of the electronic device 32 is measured by constructing simultaneous equations on the basis of the distance information obtained from the direct wave and the reflected wave of the sound emitted from the audio output block 31, allowing an increase in the accuracy of the measured position of the electronic device 32.

Note that, in the above, an example has been described where the audio signal based on sound (sound wave) is used as the transmission medium of the modulated signal serving as the ranging signal; however, a different transmission medium such as a radio wave or light may be used. For example, in a smart factory or the like, a user position tracking system or the like that identifies the position of a smartphone possessed by a user by transmitting and receiving the ranging signal including a modulated signal using a radio wave such as ultra wide band (UWB) as a transmission medium may be implemented.

As described above, in a case where the ranging signal including a modulated signal is transmitted and received using a radio wave such as UWB as a transmission medium, the audio output block 31 that transmits (outputs) the ranging signal including an audio signal to emit sound may be replaced with, for example, a radio wave output block 31 that transmits (outputs) a ranging signal including a radio wave signal, and may be configured to be installed at a known position in a smart factory. Furthermore, in this case, the audio input block 41 that collects and receives (inputs) the ranging signal including an audio signal may be replaced with, for example, a radio wave input block 41 that receives (inputs) the ranging signal including a radio wave signal, or the like, and may be configured to be incorporated into the smartphone possessed by the user.

Furthermore, in a case where a transmission medium such as light, other than a sound wave and a radio wave, is used, the audio output block 31 and the audio input block 41 may be replaced with, for example, an optical output block 31 and an optical input block 41 that transmit and receive an optical signal using light as a transmission medium, the optical signal serving as the ranging signal including a modulated signal.

Moreover, the audio output block 31 and the audio input block 41 may be replaced with a ranging signal output block 31 that outputs (transmits) the ranging signal and a ranging signal input block 41 that receives (inputs) the ranging signal, respectively, regardless of the type of transmission medium of the ranging signal.

Furthermore, as for the modulated signal, an example has been described where a signal modulated by the spreading code is transmitted and received; however, other signals may be used, specifically, a transmission signal such as frequency modulated continuous wave (FMCW) or a BLE beacon may be used.

<<2. First modification>>

In the above, an example has been described where both the direct wave and the reflected wave of the sound emitted from the audio output block 31 can be collected by the electronic device 32, and the height of the ceiling is also known.

However, it is conceivable that only either the direct wave or the reflected wave of the sound emitted from the audio output block 31 can be collected, or the height of the ceiling is unknown.

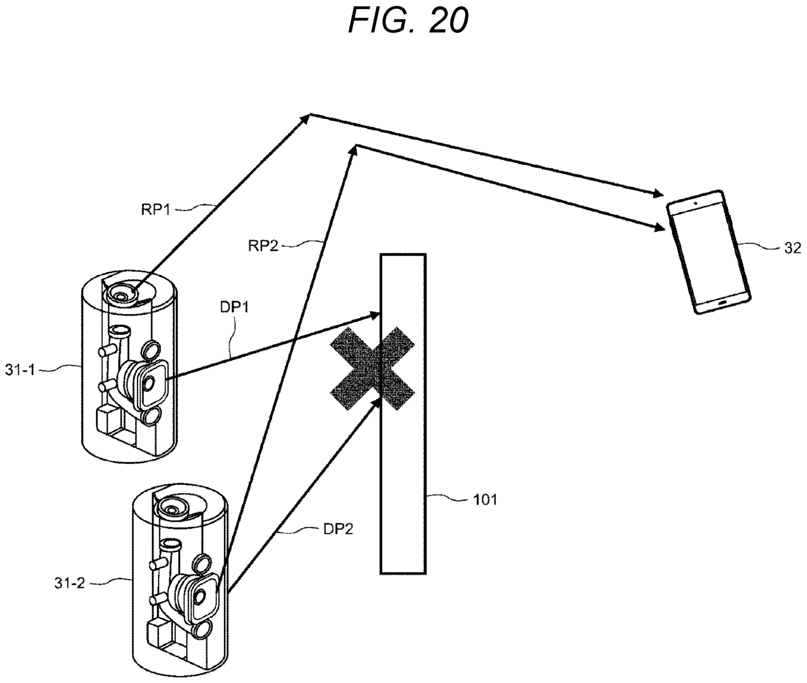

More specifically, for example, as illustrated in Fig. 20, consider a state where the audio output blocks 31-1 and 31-2 and the electronic device 32 are present, and an obstacle 101 is present at the intermediate position between the two.

In this case, as illustrated in Fig. 20, direct waves propagating through paths DP1 and DP2 of sound emitted from the audio output blocks 31-1 and 31-2 are blocked by the obstacle 101 and do not reach the electronic device 32.

On the other hand, of the sound emitted from the audio output blocks 31-1 and 31-2, reflected waves propagating through paths RP1 and RP2 and reflecting off the ceiling reach the electronic device 32.

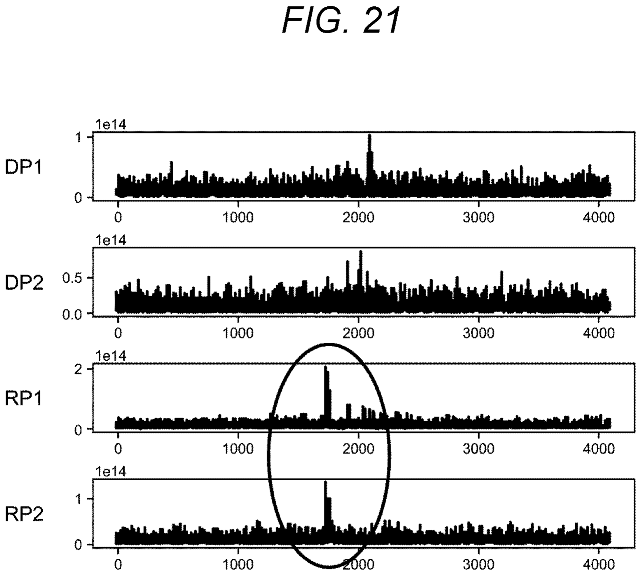

As a result, the timing at which the peak of the observed cross-correlation is observed in the audio input block 41 of the electronic device 32 is detected as a waveform as illustrated in Fig. 21.

Note that, in Fig. 21, the first and second from the top indicate cross-correlation of the direct waves propagating through the paths DP1 and DP2, and the third and fourth from the top indicate cross-correlation of the reflected waves propagating through the paths RP1 and RP2.

Comparing the upper two waveforms with the lower two waveforms in Fig. 21, there are no marked peaks in the direct waves through the paths DP1 and DP2 as indicated by the upper two waveforms, but marked peaks appear in the reflected waves through the paths RP1 and RP2 as marked with a circle in the lower two waveforms in Fig. 21.

Note that peaks also appear in the direct waves through the two paths DP1 and DP2 in Fig. 21, but it is obvious that the peaks are not peaks of the direct waves because the peaks appear later than the peaks of the reflected waves through the paths RP1 and RP2 or the peaks are not prominent and do not have a high level across the waves.

Therefore, in such a case, as illustrated in Fig. 21, it can be recognized from the waveform of the cross-correlation that only the reflected wave is detected.

In such a case, the position calculation unit 94 recognizes from the waveform of the cross-correlation that there is no direct wave and only the reflected wave is detected, forms simultaneous equations using only the information regarding the distance obtained on the basis of the reflected wave, and measures the position of the electronic device 32 by solving the simultaneous equations.

Note that, here, an example has been described where the direct wave is blocked by the obstacle 101 and only the reflected wave is detected; however, in a case where the reflected wave is blocked by the obstacle 101 and only the peak of the direct wave is detected, simultaneous equations are formed only with the direct wave, and the simultaneous equations are solved to calculate the position of the electronic device 32.

Furthermore, in a case where the height of the ceiling is unknown, the number of equations is increased to form simultaneous equations so that the height of the ceiling can also be treated as an unknown, and the height of the ceiling is also calculated together with the position of the electronic device 32. It is therefore desirable that a sufficient number of audio output blocks 31 be installed so that simultaneous equations including an unknown of the reflective object such as the height of the ceiling can be constructed.

<Modification of position measurement processing>

Next, with reference to the flowchart in Fig. 12, a description will be given of a modification of the position measurement processing by the electronic device 32 in which corresponding processing is performed in a case where either the reflected wave or the direct wave described above is blocked, in a case where the height of the ceiling is known, or in a case where the height of the ceiling is unknown.

Note that the processing by the audio output block 31 is similar to the processing described with reference to the flowchart in Fig. 17, and thus the description thereof is omitted.

Furthermore, steps S51 to S59, and S63 in Fig. 12 are similar to steps S11 to S19, and S22 in Fig. 17, and thus the description thereof is omitted.

That is, in steps S51 to 59 of the flowchart in Fig. 12, the sound emitted from the audio output block 31 is collected, the propagation time from the audio output block 31 is calculated, and the direct wave and the reflected wave are identified, then the processing proceeds to step S60.

In step S60, as described with reference to Figs. 20 and 21, the position calculation unit 95 determines whether or not only the reflected wave has been detected from the cross-correlation of the direct and reflected waves.

In a case where it is determined in step S60 that only the reflected wave has been detected, the processing proceeds to step S61.

In step S61, the position calculation unit 95 calculates only the distance based on the reflected wave for each of the plurality of audio output blocks 31.

In step S62, the position calculation unit 95 generates simultaneous equations including the above-described equation (7) or equation (8) in which the self-position and the height of the ceiling are unknowns only from the distance based on the reflected wave for each of the plurality of audio output blocks 31, solves the simultaneous equations to calculate the self-position and the height of the ceiling, and outputs the results to the control unit 42. Note that, here, it is assumed that the height of the ceiling is unknown, but in a case where the height of the ceiling is known, the height of the ceiling is substituted and used for calculation.

On the other hand, in a case where it is determined in step S60 that not only the reflected wave but also the direct wave has been detected, the processing proceeds to step S64.

In step S64, the position calculation unit 95 calculates the distance based on the direct wave and the distance based on the reflected wave for each of the plurality of audio output blocks 31.

In step S65, the position calculation unit 95 determines whether or not the height of the ceiling is known.

In a case where it is determined in step S65 that the height of the ceiling is known, the processing proceeds to step S66.

In step S66, the position calculation unit 95 generates simultaneous equations including the above-described equation (7) or equation (8) in which only the self-position is an unknown from the distance based on the direct wave and the distance based on the reflected wave for each of the plurality of audio output blocks 31, solves the simultaneous equations to calculate the self-position, and outputs the result to the control unit 42.

On the other hand, in a case where it is determined in step S65 that the height of the ceiling is unknown, the processing proceeds to step S67.

In step S67, the position calculation unit 95 generates simultaneous equations including the above-described equation (7) or equation (8) in which the self-position and the height of the ceiling are unknowns from the distance based on the direct wave and the distance based on the reflected wave for each of the plurality of audio output blocks 31, solves the simultaneous equations to calculate the self-position and the height of the ceiling, and outputs the results to the control unit 42.

Through the above processing, even in a case where the sound only includes the reflected wave (or the direct wave) due to an obstacle preventing the direct wave (or the reflected wave) from being collected, it is possible to obtain the position of the electronic device 32 on the basis of the cross-correlation by obtaining the distance on the basis of only the reflected wave (the direct wave) that has been successfully collected and forming simultaneous equations.

Furthermore, the height of the ceiling can essentially be obtained using the same processing, regardless of whether the height is known or unknown.

In either case, since the position of the electronic device 32 can essentially be calculated using two paths: the direct wave and the reflected wave, the position can be obtained with high accuracy. Furthermore, even if either the direct wave or the reflected wave cannot be detected due to some reason, the position of the electronic device 32 can be calculated using only the detected direct wave or reflected wave.

<<3. Second modification>>

In the above, an example has been described where the audio output blocks 31-1 to 31-4 are installed indoors and the position of the electronic device 32 while being carried is measured.

The indoor space may vary in size, and examples of the indoor space may include gymnasiums, halls, and the like.

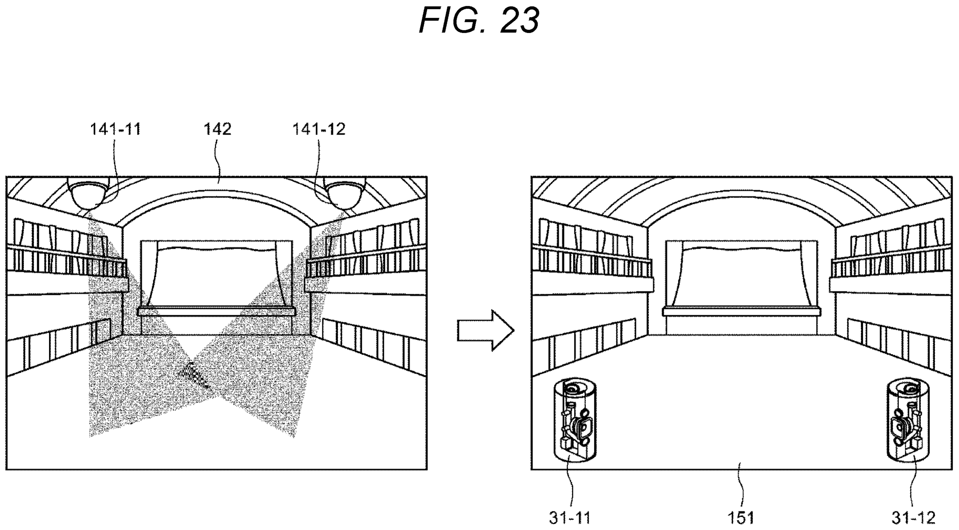

At this time, in a case of a traditional positioning system, for example, in order to implement the positioning system using a detection device including an infrared sensor, a camera, or the like, it is necessary to install detection devices 141-11 and 141-12 or the like on a ceiling 142 in order to cover a wide range as illustrated in the left part of Fig. 23.

In this case, it is necessary to install the detection devices 141-11 and 141-12 on the ceiling 142, and in places such as gymnasiums and halls, this installation can be time-consuming.

However, in the acoustic positioning system of the present disclosure, for example, as illustrated in the right part of Fig. 23, a wide range can be covered only by placing the audio output blocks 31-11 and 31-12 on a floor surface 151 of a gymnasium or hall.

As described above, the acoustic positioning system can be easily set, and the position of the electronic device 32 can be measured with high accuracy by measuring the position using the direct wave and the reflected wave.

<<4. Third modification>>

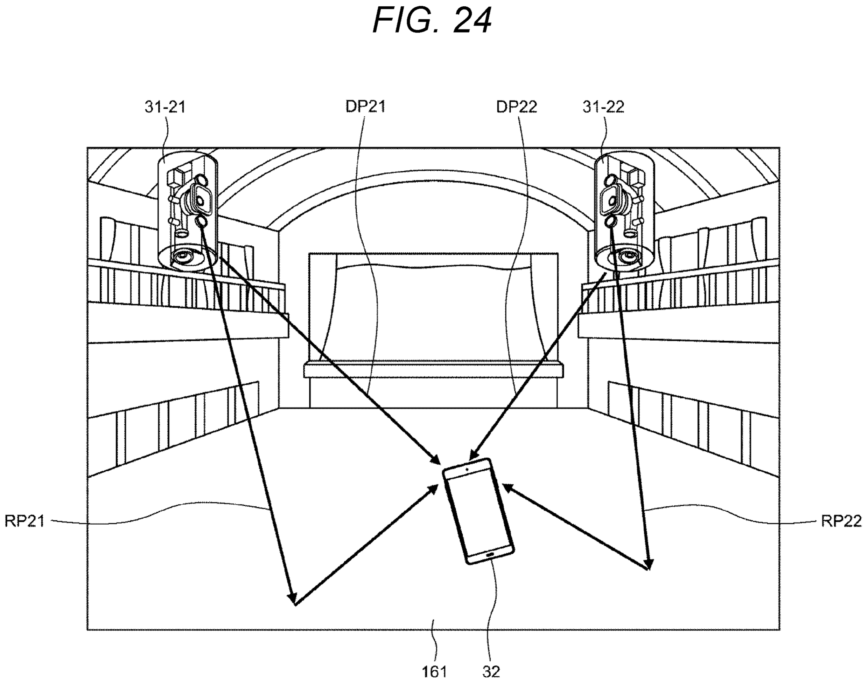

In the above, an example has been described where the audio output block 31 is installed by being placed on a floor; however, for example, as illustrated in Fig. 24, the audio output block may be set on a ceiling or the like.

Fig. 24 illustrates an example of the acoustic positioning system where the audio output blocks 31-21 and 31-22 are set on the ceiling of a gymnasium or a hall.

In this case, it is possible to obtain the position of the electronic device 32 on the basis of the sound emitted from each of the audio output blocks 31-21 and 31-22, the sound including the direct waves collected through the paths DP21 and DP22 and the reflected waves collected through the paths RP21 and RP22.

At this time, the reflected waves through the paths RP21 and RP22 are reflected off the floor surface 161 and collected by the electronic device 32.

Even in the acoustic positioning system having the configuration as illustrated in Fig. 24, the position of the electronic device 32 can be measured with high accuracy by using the distance results obtained from the direct waves through the paths DP21 and DP22 and the reflected waves through the paths RP21 and RP22 to form simultaneous equations.

<<5. Fourth modification>>

In the above, an example has been described where the audio output block 31 is set on the ceiling or the like and the reflected wave reflected off the floor surface is used; however, the reflective object is not limited to the ceiling or the floor surface, and any object that reflects sound, such as a wall, can be used.

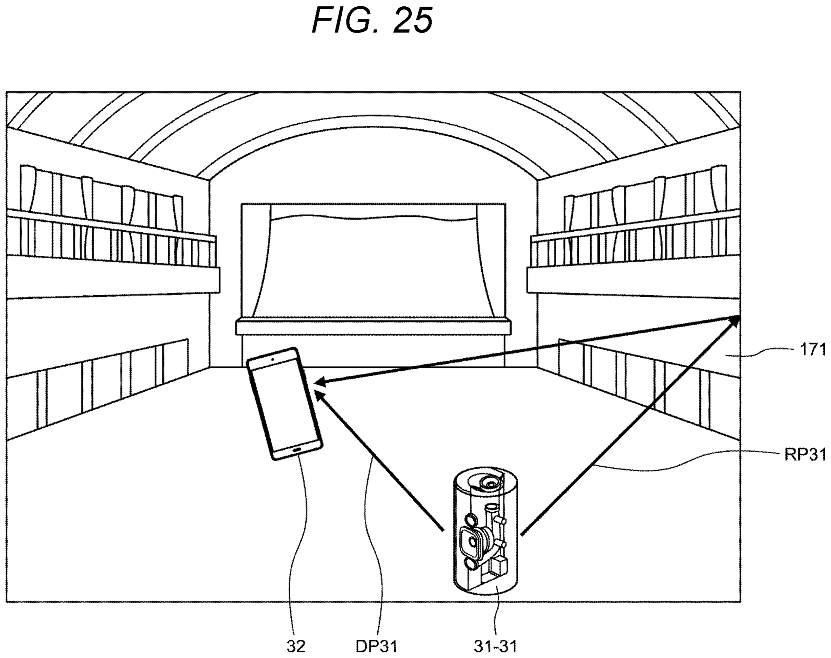

Fig. 25 illustrates an example of the acoustic positioning system where the audio output block 31-31 is installed on the floor surface of a gymnasium or a hall, and emitted sound is reflected off a wall surface 171 and is used as a reflected wave.

In this case, the sound emitted from the audio output block 31-31 is collected by the electronic device 32 as sound including a direct wave through a path DP31 and a reflected wave through a path RP31, and the position can be obtained.

At this time, the sound including the reflected wave through the path RP31 is reflected off the wall surface 171 and collected by the electronic device 32.

Even in the acoustic positioning system having the configuration as illustrated in Fig. 25, the position of the electronic device 32 can be measured with high accuracy by using the distance results obtained from the direct wave through the path DP31 and the reflected wave through the path RP31 to form simultaneous equations.

Moreover, the position can be measured with higher accuracy using simultaneous equations based on the respective distances based on a combination of reflected waves reflected off the ceiling, the floor surface, and the wall.

<<6. Fifth modification>>

In the above, an example has been described where the acoustic positioning system includes the audio output block 31 that emits sound and the electronic device 32 whose position is to be measured; however, it is also possible to employ a configuration where the function as the audio output block 31 and the function as the electronic device 32 that measures a position are combined.

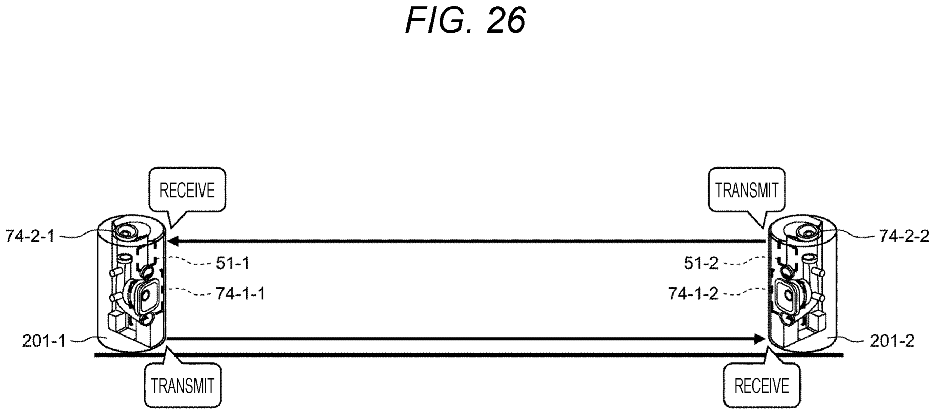

The acoustic positioning system in Fig. 26 includes audio output blocks 201-1 and 201-2, each including the combination of the function as the audio output block 31 and the function as the electronic device 32 that measures a position, and the audio output blocks 201-1 and 201-2 include audio output units 74-1-1 and 74-2-1, and 74-1-2 and 74-2-2 that emit sound and audio input units 51-1 and 51-2, respectively, and have both the functions of the audio output block 31 and the electronic device 32 described above.

Such a configuration allows both the audio output blocks 201-1 and 201-2 to transmit and receive the spreading code signal, as illustrated in Fig. 26.

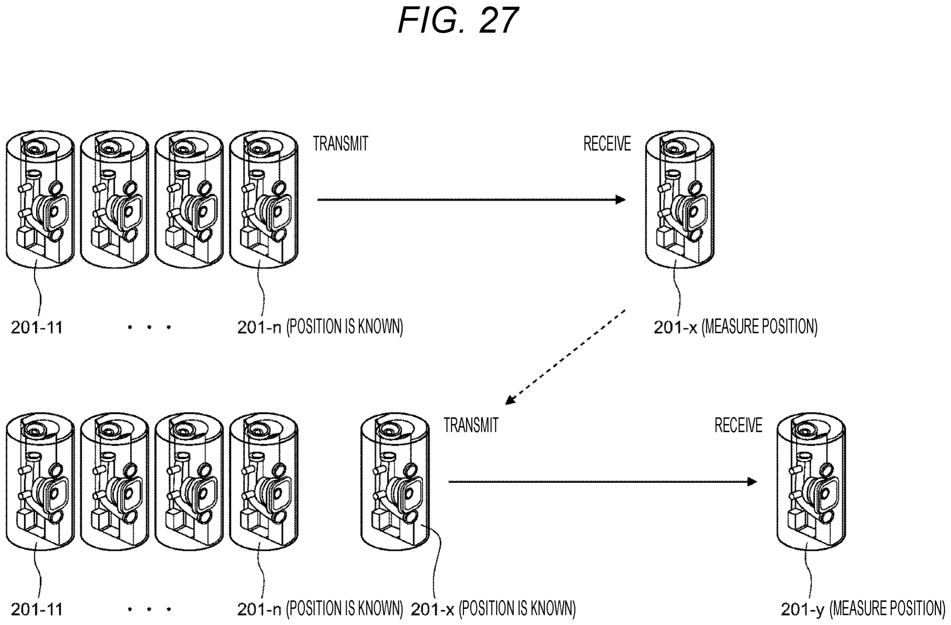

It is therefore possible to implement the acoustic positioning system as illustrated in the upper part of Fig. 27, for example. Note that the acoustic positioning system in the upper part of Fig. 27 includes audio output blocks 201-1 to 201-n and 201-x, each including the combination of the function as the audio output block 31 and the function as the electronic device 32 that measures a position.

Each of the audio output blocks 201-1 to 201-n and 201-x includes audio output units 74-1 and 74-2 that emit sound and an audio input unit 51, and has both the functions of the audio output block 31 and the electronic device 32 described above.

Here, as illustrated in the upper part of Fig. 27, consider a case where the acoustic positioning system includes audio output blocks 201-1 to 201-n whose positions are known and an audio output block 201-x whose position is unknown.

In a case of the upper part of Fig. 27, the audio output blocks 201-1 to 201-n whose positions are known function as the audio output block 31 described above, and the audio output block 201-x whose position is unknown functions as the electronic device 32.

Therefore, when the audio output block 201-x is newly installed, it is possible to measure its own installed position.

After the audio output block 201-x is installed and the position is measured, as illustrated in the lower part of Fig. 27, when a new audio output block 201-y is separately installed, not only the positions of the audio output blocks 201-1 to 201-n but also the position of the audio output block 201-x are known.

Therefore, in addition to the audio output blocks 201-1 to 201-n, the audio output block 201-x functions as the audio output block 31, so that the newly installed audio output block 201-y functions similarly to the electronic device 32, making it possible to measure the newly installed position.

As described above, after the audio output blocks 201 with known reference positions are installed in sufficient numbers to form simultaneous equations, the positions of newly installed audio output blocks 201 can be sequentially measured using the position measurement processing.

This allows for the elimination of the need to individually measure the position when installing a new audio output block 201.

<<7. Example of execution by software>>

Incidentally, the series of processing described above can be executed by hardware, but can also be executed by software. In a case where the series of processing is executed by software, a program forming the software is installed from a recording medium into, for example, a computer built into dedicated hardware or a general-purpose computer that is capable of executing various functions by installing various programs, or the like.

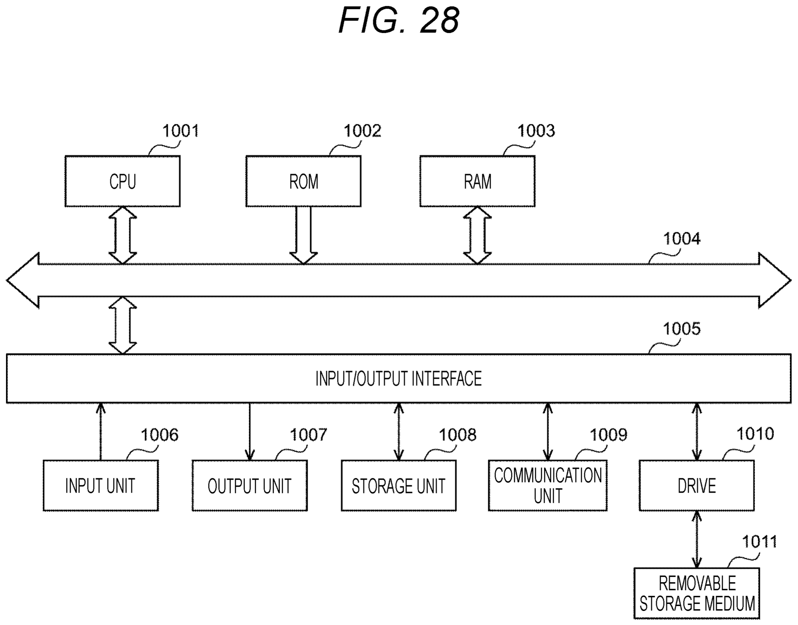

Fig. 28 illustrates a configuration example of a general-purpose computer. This computer includes a central processing unit (CPU) 1001. An input/output interface 1005 is connected to the CPU 1001 via a bus 1004. A read only memory (ROM) 1002 and a random access memory (RAM) 1003 are connected to the bus 1004.

The input/output interface 1005 is connected to an input unit 1006 including an input device such as a keyboard or a mouse with which the user inputs an operation command, an output unit 1007 that outputs a processing operation screen and an image of a processing result to a display device, a storage unit 1008 including a hard disk drive or the like that stores programs and various types of data, and a communication unit 1009 that includes a local area network (LAN) adapter or the like and executes communication processing via a network represented by the Internet. Furthermore, a drive 1010 that reads and writes data from and to a removable storage medium 1011 such as a magnetic disk (including flexible disk), an optical disc (including compact disc-read only memory (CD-ROM) and digital versatile disc (DVD)), a magneto-optical disk (including mini disc (MD)), or a semiconductor memory is connected.

The CPU 1001 performs various types of processing according to a program stored in the ROM 1002 or a program read from the removable storage medium 1011 such as a magnetic disk, an optical disc, a magneto-optical disk, or a semiconductor memory, installed in the storage unit 1008, and loaded from the storage unit 1008 into the RAM 1003. The RAM 1003 also appropriately stores data necessary for the CPU 1001 to perform various types of processing, and the like.

In the computer configured as described above, for example, the CPU 1001 loads the program stored in the storage unit 1008 into the RAM 1003 via the input/output interface 1005 and the bus 1004 and executes the program, thereby performing the above-described series of processing.

The program executed by the computer (CPU 1001) can be provided by being recorded in the removable storage medium 1011 as a package medium or the like, for example. Furthermore, the program can be provided via a wired or wireless transmission medium such as a local area network, the Internet, or digital satellite broadcasting.

In the computer, the program can be installed in the storage unit 1008 via the input/output interface 1005 by attaching the removable storage medium 1011 to the drive 1010. Furthermore, the program may be received by the communication unit 1009 by means of the wired or wireless transmission medium to be installed on the storage unit 1008. Further, the program can be installed in the ROM 1002 or the storage unit 1008 in advance.

Note that the program executed by the computer may be a program that performs processing in a time series according to an order described in the present specification, or may be a program that performs processing in parallel or at necessary timing such as when a call is made.

Note that the CPU 1001 in Fig. 28 implements the functions of the audio output block 31 and the audio input block 41 in Fig. 1.

Furthermore, in the present specification, the system means a set of a plurality of components (devices, modules (components), and the like), and it does not matter whether or not all the components are in the same housing. Therefore, a plurality of devices housed in separate housings and connected to each other via a network and a single device including a plurality of modules housed in a single housing are both systems.

Note that the embodiment of the present disclosure is not limited to the above-described embodiment, and various modifications can be made without departing from the gist of the present disclosure.

For example, the present disclosure may have a configuration of cloud computing in which one function is shared by a plurality of devices via a network and processing is performed in cooperation.

Furthermore, each step described in the flowchart described above can be performed by one device or can be performed by a plurality of devices in a shared manner.

Moreover, in a case where a plurality of pieces of processing is included in one step, the plurality of pieces of processing included in the one step can be performed by one device or performed by a plurality of devices in a shared manner.

Note that the present disclosure may also have the following configurations.

<1> A program causing a computer to function as:

an audio receiving unit and a position calculation unit, the audio receiving unit being configured to receive an audio signal including a spreading code signal obtained by performing spread spectrum modulation using a spreading code, the audio signal being output from each of a plurality of audio output blocks located at known positions, the position calculation unit being configured to calculate a position of the audio receiving unit on the basis of distances to the plurality of audio output blocks identified on the basis of a propagation time that is time taken for the audio signals of the plurality of audio output blocks to be transmitted to and received by the audio receiving unit, in which

the audio receiving unit receives the audio signals transmitted by direct waves from the plurality of audio output blocks and the audio signals transmitted by reflected waves output from the plurality of audio output blocks and reflected off a reflective object, and

the position calculation unit calculates the position of the audio receiving unit on the basis of the audio signal transmitted by each of the direct and reflected waves.

<2> The program according to <1>, in which

a propagation time calculation unit that calculates the propagation time taken for each of the audio signals of the plurality of audio output blocks to be transmitted to the audio receiving unit is further included, and

the position calculation unit calculates the position of the audio receiving unit on the basis of distances to the plurality of audio output blocks identified on the basis of a propagation time of each of the direct and reflected waves of the audio signals of the plurality of audio output blocks, and the known positions of the plurality of audio output blocks.

<3> The program according to <2>, in which
the propagation time calculation unit includes:

a cross-correlation calculation unit that calculates cross-correlation between a spreading code signal in the audio signals received by the audio receiving unit and a spreading code signal in the audio signals output from the plurality of audio output blocks; and

a peak detection unit that detects time at which a peak appears in the cross-correlation as the propagation time, and

the position calculation unit selects the peak of the direct wave and the peak of the reflected wave from among the peaks in the cross-correlation, and calculates the position of the audio receiving unit on the basis of distances to the plurality of audio output blocks identified on the basis of the propagation time of the audio signal corresponding to each of the selected peak of the direct wave and the selected peak of the reflected wave, and the known positions of the plurality of audio output blocks.

<4> The program according to <3>, in which
the position calculation unit selects the peak of the direct wave and the peak of the reflected wave from among the peaks in the cross-correlation on the basis of a geometric constraint condition identified on the basis of the known positions of the plurality of audio output blocks, and calculates the position of the audio receiving unit on the basis of the distances to the plurality of audio output blocks identified on the basis of the propagation time corresponding to each of the selected peak of the direct wave and the selected peak of the reflected wave, and the known positions of the plurality of audio output blocks.

<5> The program according to <4>, in which
the position calculation unit selects the peak of the direct wave and the peak of the reflected wave from among the peaks in the cross-correlation, a time difference between the peak of the direct wave and the peak of the reflected wave being within a predetermined range based on the geometric constraint condition identified on the basis of the known positions of the plurality of audio output blocks, the peak of the direct wave appearing earlier than the peak of the reflected wave, and calculates the position of the audio receiving unit on the basis of the distances to the plurality of audio output blocks identified on the basis of the propagation time corresponding to each of the selected peak of the direct wave and the selected peak of the reflected wave, and the known positions of the plurality of audio output blocks.

<6> The program according to <2>, in which

in a case where a position of the reflective object is unknown, the position calculation unit calculates the position of the audio receiving unit and the position of the reflective object on the basis of the distances to the plurality of audio output blocks identified on the basis of the propagation time of each of the direct and reflected waves of the audio signals of the plurality of audio output blocks, and the known positions of the plurality of audio output blocks.

<7> The program according to <6>, in which

in a case where the reflective object is a ceiling and a height of the ceiling is unknown, the position calculation unit calculates the position of the audio receiving unit and the height of the ceiling that is the reflective object on the basis of the distances to the plurality of audio output blocks identified on the basis of the propagation time of each of the direct and reflected waves of the audio signals of the plurality of audio output blocks, and the known positions of the plurality of audio output blocks.

<8> The program according to <3>, in which

in a case where the position calculation unit is unable to select a peak corresponding to the peak of the direct wave from among the peaks in the cross-correlation on the basis of a geometric constraint condition identified on the basis of the known positions of the plurality of audio output blocks, the position calculation unit selects only the peak of the reflected wave and calculates the position of the audio receiving unit on the basis of distances to the plurality of audio output blocks identified on the basis of the propagation time corresponding to the selected peak of the reflected wave, and the known positions of the plurality of audio output blocks.

<9> The program according to <1>, in which

each of the plurality of audio output blocks outputs an audio signal including the spreading code signal as the direct wave and an audio signal including the spreading code signal as the reflected wave.

<10> The program according to <9>, in which

each of the plurality of audio output blocks outputs the audio signal including the spreading code signal as the direct wave in a horizontal direction and outputs the audio signal including the spreading code signal as the reflected wave toward a ceiling as the reflective object.

<11> The program according to <10>, in which

each of the plurality of audio output blocks outputs, using a woofer speaker, the audio signal including the spreading code signal as the direct wave in the horizontal direction and outputs, using an enabled speaker, the audio signal including the spreading code signal toward the ceiling as the reflective object.

<12> The program according to <1>, in which

the reflective object includes a ceiling, a floor, and a wall.

<13> The program according to <1>, in which

the audio receiving unit is provided on a smartphone or a head mounted display (HMD).

<14> An information processing device including:

an audio receiving unit that receives an audio signal including a spreading code signal obtained by performing spread spectrum modulation using a spreading code, the audio signal being output from each of a plurality of audio output blocks located at known positions; and

a position calculation unit that calculates a position of the audio receiving unit on the basis of distances to the plurality of audio output blocks identified on the basis of a propagation time that is time taken for the audio signals of the plurality of audio output blocks to be transmitted to and received by the audio receiving unit, in which

the audio receiving unit receives the audio signals transmitted by direct waves from the plurality of audio output blocks and the audio signals transmitted by reflected waves output from the plurality of audio output blocks and reflected off a reflective object, and

the position calculation unit calculates the position of the audio receiving unit on the basis of the audio transmitted by each of the direct and reflected waves.

<15> An information processing method of an information processing device, the information processing device including:

an audio receiving unit that receives an audio signal including a spreading code signal obtained by performing spread spectrum modulation using a spreading code, the audio signal being output from each of a plurality of audio output blocks located at known positions; and

a position calculation unit that calculates a position of the audio receiving unit on the basis of distances to the plurality of audio output blocks identified on the basis of a propagation time that is time taken for the audio signals of the plurality of audio output blocks to be transmitted to and received by the audio receiving unit,
the information processing method including:

causing the audio receiving unit to receive the audio signals transmitted by direct waves from the plurality of audio output blocks and the audio signals transmitted by reflected waves output from the plurality of audio output blocks and reflected off a reflective object, and
causing the position calculation unit to calculate the position of the audio receiving unit on the basis of the audio signal transmitted by each of the direct and reflected waves.

REFERENCE SIGNS LIST

| 11 | Acoustic positioning system |
|---|---|
| 31, 31-1 to 31-4 | Audio output block |
| 32 | Electronic device |
| 41 | Audio input block |
| 42 | Control unit |
| 43 | Communication unit |
| 51, 51-1 to 51-4 | Audio input unit |
| 71 | Spreading code generation unit |
| 72 | Known music source generation unit |
| 73 | Audio generation unit |
| 74 | Audio output unit |
| 81 | Spreading unit |
| 82 | Frequency shift processing unit |
| 83 | Sound field control unit |
| 91 | Known music source removal unit |
| 92 | Spatial transmission characteristic calculation unit |
| 93 | Propagation time calculation unit |
| 94 | Position calculation unit |

**Claims**

1. A program causing a computer to function as:

a ranging signal receiving unit and a position calculation unit, the ranging signal receiving unit being configured to receive a ranging signal including a spreading code signal obtained by performing spread spectrum modulation using a spreading code, the ranging signal being output from each of a plurality of ranging signal output blocks located at known positions, the position calculation unit being configured to calculate a position of the ranging signal receiving unit on a basis of distances to the plurality of ranging signal output blocks identified on a basis of a propagation time that is time taken for the ranging signals of the plurality of ranging signal output blocks to be transmitted to and received by the ranging signal receiving unit, wherein
the ranging signal receiving unit receives the ranging signals transmitted by direct waves from the plurality of ranging signal output blocks and the ranging signals transmitted by reflected waves output from the plurality of ranging signal output blocks and reflected off a reflective object, and
the position calculation unit calculates the position of the ranging signal receiving unit on a basis of the ranging signal transmitted by each of the direct and reflected waves.

2. The program according to claim 1, wherein

a propagation time calculation unit that calculates the propagation time taken for each of the ranging signals of the plurality of ranging signal output blocks to be transmitted to the ranging signal receiving unit is further included, and
the position calculation unit calculates the position of the ranging signal receiving unit on a basis of distances to the plurality of ranging signal output blocks identified on a basis of a propagation time of each of the direct and reflected waves of the ranging signals of the plurality of ranging signal output blocks, and the known positions of the plurality of ranging signal output blocks.

3. The program according to claim 2, wherein

the propagation time calculation unit includes:

a cross-correlation calculation unit that calculates cross-correlation between a spreading code signal in the ranging signals received by the ranging signal receiving unit and a spreading code signal in the ranging signals output from the plurality of ranging signal output blocks; and
a peak detection unit that detects time at which a peak appears in the cross-correlation as the propagation time, and

the position calculation unit selects the peak of the direct wave and the peak of the reflected wave from among the peaks in the cross-correlation, and calculates the position of the ranging signal receiving unit on a basis of distances to the plurality of ranging signal output blocks identified on a basis of the propagation time of the ranging signal corresponding to each of the selected peak of the direct wave and the selected peak of the reflected wave, and the known positions of the plurality of ranging signal output blocks.

4. The program according to claim 3, wherein
the position calculation unit selects the peak of the direct wave and the peak of the reflected wave from among the peaks in the cross-correlation on a basis of a geometric constraint condition identified on a basis of the known positions of the plurality of ranging signal output blocks, and calculates the position of the ranging signal receiving unit on a basis of the distances to the plurality of ranging signal output blocks identified on a basis of the propagation time corresponding to each of the selected peak of the direct wave and the selected peak of the reflected wave, and the known positions of the plurality of ranging signal output blocks.

5. The program according to claim 4, wherein
the position calculation unit selects the peak of the direct wave and the peak of the reflected wave from among the peaks in the cross-correlation, a time difference between the peak of the direct wave and the peak of the reflected wave being within a predetermined range based on the geometric constraint condition identified on a basis of the known positions of the plurality of ranging signal output blocks, the peak of the direct wave appearing earlier than the peak of the reflected wave, and calculates the position of the ranging signal receiving unit on a basis of the distances to the plurality of ranging signal output blocks identified on a basis of the propagation time corresponding to each of the selected peak of the direct wave and the selected peak of the reflected wave, and the known positions of the plurality of ranging signal output blocks.

6. The program according to claim 2, wherein
in a case where a position of the reflective object is unknown, the position calculation unit calculates the position of the ranging signal receiving unit and the position of the reflective object on a basis of the distances to the plurality of ranging signal output blocks identified on a basis of the propagation time of each of the direct and reflected waves of the ranging signals of the plurality of ranging signal output blocks, and the known positions of the plurality of ranging signal output blocks.

7. The program according to claim 6, wherein
in a case where the reflective object is a ceiling and a height of the ceiling is unknown, the position calculation unit calculates the position of the ranging signal receiving unit and the height of the ceiling that is the reflective object on a basis of the distances to the plurality of ranging signal output blocks identified on a basis of the propagation time of each of the direct and reflected waves of the ranging signals of the plurality of ranging signal output blocks, and the known positions of the plurality of ranging signal output blocks.

8. The program according to claim 3, wherein
in a case where the position calculation unit is unable to select a peak corresponding to the peak of the direct wave from among the peaks in the cross-correlation on a basis of a geometric constraint condition identified on a basis of the known positions of the plurality of ranging signal output blocks, the position calculation unit selects only the peak of the reflected wave and calculates the position of the ranging signal receiving unit on a basis of distances to the plurality of ranging signal output blocks identified on a basis of the propagation time corresponding to the selected peak of the reflected wave, and the known positions of the plurality of ranging signal output blocks.

9. The program according to claim 1, wherein
each of the plurality of ranging signal output blocks outputs a ranging signal including the spreading code signal as the direct wave and a ranging signal including the spreading code signal as the reflected wave.

10. The program according to claim 9, wherein
each of the plurality of ranging signal output blocks outputs the ranging signal including the spreading code signal as the direct wave in a horizontal direction and outputs the ranging signal including the spreading code signal as the reflected wave toward a ceiling as the reflective object.

11. The program according to claim 10, wherein
each of the plurality of ranging signal output blocks outputs, using a woofer speaker, the ranging signal including the spreading code signal as the direct wave in the horizontal direction and outputs, using an enabled speaker, the ranging signal including the spreading code signal toward the ceiling as the reflective object.

12. The program according to claim 1, wherein
the reflective object includes a ceiling, a floor, and a wall.

13. The program according to claim 1, wherein
the ranging signal receiving unit is provided on a smartphone or a head mounted display (HMD).

14. The program according to claim 1, wherein
the ranging signal includes an audio signal, a radio wave signal, and an optical signal.

15. An information processing device comprising:

a ranging signal receiving unit that receives a ranging signal including a spreading code signal obtained by performing spread spectrum modulation using a spreading code, the ranging signal being output from each of a plurality of ranging signal output blocks located at known positions; and
a position calculation unit that calculates a position of the ranging signal receiving unit on a basis of distances to the plurality of ranging signal output blocks identified on a basis of a propagation time that is time taken for the ranging signals of the plurality of ranging signal output blocks to be transmitted to and received by the ranging signal receiving unit, wherein
the ranging signal receiving unit receives the ranging signals transmitted by direct waves from the plurality of ranging signal output blocks and the ranging signals transmitted by reflected waves output from the plurality of ranging signal output blocks and reflected off a reflective object, and
the position calculation unit calculates the position of the ranging signal receiving unit on a basis of the ranging signal transmitted by each of the direct and reflected waves.

16. An information processing method of an information processing device, the information processing device including:

a ranging signal receiving unit that receives a ranging signal including a spreading code signal obtained by performing spread spectrum modulation using a spreading code, the ranging signal being output from each of a plurality of ranging signal output blocks located at known positions; and
a position calculation unit that calculates a position of the ranging signal receiving unit on a basis of distances to the plurality of ranging signal output blocks identified on a basis of a propagation time that is time taken for the ranging signals of the plurality of ranging signal output blocks to be transmitted to and received by the ranging signal receiving unit,
the information processing method comprising:

causing the ranging signal receiving unit to receive the ranging signals transmitted by direct waves from the plurality of ranging signal output blocks and the ranging signals transmitted by reflected waves output from the plurality of ranging signal output blocks and reflected off a reflective object, and
causing the position calculation unit to calculate the position of the ranging signal receiving unit on a basis of the ranging signal transmitted by each of the direct and reflected waves.

# FIG. 1

31-1

AUDIO OUTPUT
BLOCK

31-2

AUDIO OUTPUT
BLOCK

11

32

ELECTRONIC
DEVICE

MOVE

31-3

AUDIO OUTPUT
BLOCK

31-4

AUDIO OUTPUT
BLOCK

32

ELECTRONIC DEVICE

41

AUDIO INPUT BLOCK

51

AUDIO INPUT UNIT

52

POSITION
DETECTION UNIT

FIG. 2

# FIG. 3

EP 4 644 941 A1

**FIG. 4**

ELECTRONIC DEVICE — 32

AUDIO INPUT BLOCK — 41

POSITION DETECTION UNIT — 52

AUDIO INPUT UNIT — 51

KNOWN MUSIC SOURCE REMOVAL UNIT — 91

SPATIAL TRANSMISSION CHARACTERISTIC CALCULATION UNIT — 92

PROPAGATION TIME CALCULATION UNIT — 93

POSITION CALCULATION UNIT — 94

POSITION

CONTROL UNIT — 42

COMMUNICATION UNIT — 43

# FIG. 5

## FIG. 6

FIG. 7

EP 4 644 941 A1

## FIG. 8

73

**AUDIO GENERATION UNIT**

81

SPREADING UNIT

82

FREQUENCY SHIFT PROCESSING UNIT

74

51

91

KNOWN MUSIC SOURCE REMOVAL UNIT

CROSS-CORRELATION CALCULATION UNIT (DESPREADING)

131

INVERSE SHIFT PROCESSING UNIT

130

PEAK DETECTION UNIT

132

PROPAGATION TIME CALCULATION UNIT

93

PROPAGATION TIME

# FIG. 9

# FIG. 10

*FIG. 11*

**AUDIO INPUT BLOCK SIDE**

0Hz~8kHz — Fs

DOWNSAMPLING TO 1/m

16kHz~24kHz — mFs

BANDWIDTH LIMITATION

16kHz~24kHz — uFs

51

74

**AUDIO OUTPUT BLOCK SIDE**

0Hz~8kHz — Fs

UPSAMPLING BY A FACTOR OF m

16kHz~24kHz — mFs — Fs — Fs

BANDWIDTH LIMITATION

16kHz~24kHz — uFs — 2Fs — Fs

# FIG. 12

FIG. 13

EP 4 644 941 A1

# FIG. 14

# FIG. 15

FIG. 16

# FIG. 17

ELECTRONIC DEVICE

POSITION MEASUREMENT PROCESSING
START

S11
START OF POSITION MEASUREMENT PROCESSING INSTRUCTED?

No

Yes

S12
REQUEST START OF POSITION MEASUREMENT PROCESSING

S13
ACQUIRE POSITION INFORMATION REGARDING AUDIO OUTPUT BLOCK

S14
REQUEST SOUND EMISSION

S15
COLLECT SOUND

S16
CALCULATE SPATIAL TRANSMISSION CHARACTERISTIC

S17
GENERATE ANTI-PHASE SIGNAL OF MUSIC AND REMOVE KNOWN MUSIC SOURCE

S18
PROPAGATION TIME CALCULATION PROCESSING

S19
SELECT DIRECT WAVE AND REFLECTED WAVE

S20
CALCULATE DISTANCE FROM AUDIO OUTPUT BLOCK
ON THE BASIS OF BOTH DIRECT WAVE AND REFLECTED WAVE

S21
CALCULATE POSITION ON THE BASIS OF DISTANCE FROM AUDIO OUTPUT BLOCK
ON THE BASIS OF DIRECT WAVE AND REFLECTED WAVE

S22
PERFORM PROCESSING ACCORDING TO CALCULATED POSITION

END

# FIG. 18

AUDIO OUTPUT BLOCK

( POSITION MEASUREMENT PROCESSING
START )

No ⟨ START OF POSITION MEASUREMENT
PROCESSING REQUESTED? ⟩ S31

Yes

MAKE NOTIFICATION OF START OF
POSITION MEASUREMENT PROCESSING AND
TRANSMIT POSITION INFORMATION
REGARDING AUDIO OUTPUT BLOCK  S32

No ⟨ SOUND EMISSION REQUESTED? ⟩ S33

Yes

GENERATE SPREADING CODE  S34

GENERATE KNOWN MUSIC SOURCE  S35

PERFORM SPREAD SPECTRUM USING SPREADING CODE  S36

PERFORM FREQUENCY-SHIFT PROCESSING
FOR EACH SPEAKER  S37

EMIT KNOWN MUSIC SOURCE AND
SOUND OF SPREADING CODE SIGNAL FROM EACH SPEAKER  S38

( END )

# FIG. 19

```
┌─────────────────────────────────────────┐
│  PROPAGATION TIME CALCULATION PROCESSING │
│                  START                   │
└─────────────────────────────────────────┘
                    │
                    ▼            S51
┌─────────────────────────────────────────┐
│         INVERSELY SHIFT FREQUENCY         │
└─────────────────────────────────────────┘
                    │
                    ▼            S52
┌─────────────────────────────────────────┐
│        CALCULATE CROSS-CORRELATION        │
└─────────────────────────────────────────┘
                    │
                    ▼            S53
┌─────────────────────────────────────────┐
│            DETECT PEAK POSITION           │
└─────────────────────────────────────────┘
                    │
                    ▼            S54
┌─────────────────────────────────────────┐
│         CALCULATE PROPAGATION TIME        │
└─────────────────────────────────────────┘
                    │
                    ▼
           ┌──────────────────┐
           │      RETURN       │
           └──────────────────┘
```

FIG. 20

EP 4 644 941 A1

# FIG. 21

# FIG. 22

ELECTRONIC DEVICE

POSITION ESTIMATION PROCESSING
START

No → START OF POSITION ESTIMATION PROCESSING INSTRUCTED? — S51

Yes

REQUEST START OF POSITION ESTIMATION PROCESSING — S52

ACQUIRE POSITION INFORMATION REGARDING AUDIO OUTPUT BLOCK — S53

REQUEST SOUND OUTPUT — S54

REQUEST SOUND EMISSION — S55

CALCULATE SPATIAL TRANSMISSION CHARACTERISTIC — S56

GENERATE ANTI-PHASE SIGNAL OF MUSIC
AND REMOVE KNOWN MUSIC SOURCE — S57

PROPAGATION TIME CALCULATION PROCESSING — S58

SELECT DIRECT WAVE AND REFLECTED WAVE — S59

DIRECT WAVE RECEIVED? — S60 → No

S61 — CALCULATE DISTANCE FROM
AUDIO OUTPUT BLOCK
ON THE BASIS OF ONLY REFLECTED WAVE

Yes

S64 — CALCULATE DISTANCE FROM AUDIO OUTPUT BLOCK ON
THE BASIS OF BOTH DIRECT WAVE AND REFLECTED WAVE

S62 — CALCULATE POSITION AND HEIGHT OF
CEILING ON THE BASIS OF DISTANCE
FROM AUDIO OUTPUT BLOCK,
THE DISTANCE BEING CALCULATED
ON THE BASIS OF ONLY REFLECTED WAVE

No ← HEIGHT OF CEILING KNOWN? — S65

Yes

S67 — CALCULATE POSITION AND HEIGHT OF CEILING
ON THE BASIS OF DISTANCE FROM AUDIO
OUTPUT BLOCK, THE DISTANCE BEING
CALCULATED ON THE BASIS OF BOTH
DIRECT WAVE AND REFLECTED WAVE

S66 — CALCULATE POSITION ON THE BASIS OF DISTANCE
FROM AUDIO OUTPUT BLOCK, THE DISTANCE
BEING CALCULATED ON THE BASIS OF
BOTH DIRECT WAVE AND REFLECTED WAVE

PERFORM PROCESSING ACCORDING TO CALCULATED POSITION — S63

END

## FIG. 23

EP 4 644 941 A1

# FIG. 24

EP 4 644 941 A1

# FIG. 25

## FIG. 26

FIG. 27

# FIG. 28

EP 4 644 941 A1

**EP 4 644 941 A1**

## INTERNATIONAL SEARCH REPORT

| | International application No. |
|---|---|
| | **PCT/JP2023/044359** |

<table>
<tr><td colspan="3"><b>A. CLASSIFICATION OF SUBJECT MATTER</b><br><br><i>G01S 5/26</i>(2006.01)i; <i>G01S 5/06</i>(2006.01)i; <i>G01S 5/14</i>(2006.01)i; <i>G01S 5/30</i>(2006.01)i<br>FI: G01S5/26; G01S5/30; G01S5/06; G01S5/14<br><br>According to International Patent Classification (IPC) or to both national classification and IPC</td></tr>
<tr><td colspan="3"><b>B. FIELDS SEARCHED</b></td></tr>
<tr><td colspan="3">Minimum documentation searched (classification system followed by classification symbols)<br><br>G01S5/00-5/30</td></tr>
<tr><td colspan="3">Documentation searched other than minimum documentation to the extent that such documents are included in the fields searched<br><br>Published examined utility model applications of Japan 1922-1996<br>Published unexamined utility model applications of Japan 1971-2024<br>Registered utility model specifications of Japan 1996-2024<br>Published registered utility model applications of Japan 1994-2024</td></tr>
<tr><td colspan="3">Electronic data base consulted during the international search (name of data base and, where practicable, search terms used)</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| Y | WO 2022/163801 A1 (SONY GROUP CORPORATION) 04 August 2022 (2022-08-04) paragraphs [0014]-[0240], fig. 1-30 | 1-16 |
| Y | 村上 弘晃 MURAKAMI, Hiroaki. 鏡像スピーカを用いたスマートフォン高精度3次元測位手法, 情報処理学会 論文誌 (ジャーナル) vol. 60, no. 12 [online], 15 December 2019, 2314-2324, (Smartphone Accurate 3-D Localization Using Mirror Image Speakers. IPSJ Journal.) pp. 2314-2324 | 1-16 |
| Y | JP 2009-216474 A (BROTHER KOGYO KABUSHIKI KAISHA) 24 September 2009 (2009-09-24) paragraphs [0052]-[0057], [0130], fig. 5 | 6-7, 10-11 |
| Y | JP 2020-510203 A (SONITOR TECHNOLOGIES AS) 02 April 2020 (2020-04-02) paragraph [0015] | 8 |
| Y | paragraphs [0018]-[0021] | 9-11 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2023/044359** |

**C. DOCUMENTS CONSIDERED TO BE RELEVANT**

| Category* | Citation of document, with indication, where appropriate, of the relevant passages | Relevant to claim No. |
| --- | --- | --- |
| Y | US 2022/0159397 A1 (POLK AUDIO, LLC) 19 May 2022 (2022-05-19) paragraphs [0019]-[0020], [0027], fig. 1E-2 | 11 |
| A | JP 2002-303666 A (NIPPON HOSO KYOKAI) 18 October 2002 (2002-10-18) paragraphs [0027]-[0029], fig. 1 | 1-16 |
| A | JP 2014-220741 A (YAMAHA CORPORATION) 20 November 2014 (2014-11-20) column "abstract", fig. 1 | 1-16 |
| A | JP 07-181242 A (SONY CORPORATION) 21 July 1995 (1995-07-21) paragraphs [0052], [0055] | 1-16 |
| A | US 2012/0044786 A1 (SONITOR TECHNOLOGIES) 23 February 2012 (2012-02-23) abstract, fig. 5 | 1-16 |

Form PCT/ISA/210 (second sheet) (July 2022)

EP 4 644 941 A1

INTERNATIONAL SEARCH REPORT
Information on patent family members

International application No.

**PCT/JP2023/044359**

| Patent document cited in search report | | | Publication date (day/month/year) | Patent family member(s) | | | Publication date (day/month/year) |
|---|---|---|---|---|---|---|---|
| WO | 2022/163801 | A1 | 04 August 2022 | (Family: none) | | | |
| JP | 2009-216474 | A | 24 September 2009 | (Family: none) | | | |
| JP | 2020-510203 | A | 02 April 2020 | US | 2021/0141051 | A1 | |
| | | | | paragraphs [0027], [0030]-[0033] | | | |
| | | | | WO | 2018/162885 | A1 | |
| | | | | CA | 3055134 | A1 | |
| | | | | CN | 110573899 | A | |
| US | 2022/0159397 | A1 | 19 May 2022 | WO | 2020/181288 | A1 | |
| | | | | CN | 113853800 | A | |
| JP | 2002-303666 | A | 18 October 2002 | (Family: none) | | | |
| JP | 2014-220741 | A | 20 November 2014 | (Family: none) | | | |
| JP | 07-181242 | A | 21 July 1995 | (Family: none) | | | |
| US | 2012/0044786 | A1 | 23 February 2012 | WO | 2010/084308 | A2 | |
| | | | | CN | 102378918 | A | |

Form PCT/ISA/210 (patent family annex) (July 2022)

52